# EUROPEAN PATENT SPECIFICATION

(11) **EP 0 991 058 B1**
(45) Date of publication and mention of the grant of the patent: **18.07.2001**
(21) Application number: 99121145.9
(22) Date of filing: 04.10.1996
(51) Int. Cl.: G11B 7/00, G11B 7/125

(54) **Recording method for optical information**
Aufnahmemethode für optische Information
Procédé d'enregistrement pour l' information optique

(30) Priority: 09.10.1995 JP 26124695; 09.10.1995 JP 26126295; 25.07.1996 JP 19588096
(43) Date of publication of application: 05.04.2000
(62) Divisional of application: 96932820.2
(73) Proprietor: MATSUSHITA ELECTRIC INDUSTRIAL CO., LTD., Kadoma-shi, Osaka 571-8501 (JP)
(72) Inventor: Sakaue, Yoshitaka, Hirakata-shi, Osaka 573 (JP); Nishiuchi, Kenichi, Moriguchi-shi, Osaka 570 (JP); Ohno, Eiji, Hirakata-shi, Osaka 573-0171 (JP)
(74) Representative: Grünecker, Kinkeldey, Stockmair & Schwanhäusser Anwaltssozietät

(56) References cited:
- EP-A- 0 594 425
- PATENT ABSTRACTS OF JAPAN vol. 1995, no. 08, 29 September 1995 (1995-09-29) -& JP 07 129959 A (MATSUSHITA ELECTRIC IND CO LTD), 19 May 1995 (1995-05-19) -& US 5 490 126 A (FURUMIYA SHIGERU ET AL) 6 February 1996 (1996-02-06)

## Description

### TECHNICAL FIELD

The present invention relates to a recording method for an optical disk which records and reproduces information at high speed and with high density by employing an optical means such as a laser beam.

### BACKGROUND ART

Techniques for reproducing or recording high-density information by making use of a laser beam are well known and mainly put to practical use as optical disks.

Optical disks can be classified roughly into a read-only type, a write-once read-many type, and a rewritable type.

Read-only types have been put to practical use, for example, as compact disks and laser disks, and write-once read-many and rewritable types have been put to practical use as document files, data files, and so forth.

Furthermore, rewritable optical disks mainly include magneto-optical and phase change types.

Phase change type optical disks take advantage of the fact that a recording layer gives rise to reversible state changes, for example, either between an amorphous state and a crystal state or between a crystal state and a different structural crystal state, by irradiation of a laser beam or the like. That is, at least one of a refractive index or an exhaustion coefficient of a thin film changes by laser light irradiation and performs recording, then the amplitude of the transmitted or reflected light changes at this portion, and the resultant change in the amount of the transmitted or reflected light which leads to a detecting system is detected and a signal is reproduced. Note that an alloy of Te, Se, In, and Sb is employed mainly as a typical material which gives rise to state changes between an amorphous state and a crystal state.

Also, in phase change type optical disks, 1-beam overwrite can be employed to overwrite a recorded mark. The 1-beam overwrite is a method of recording a new signal while erasing a previously recorded old signal, by modulating a laser power between a recording power and a bias power (also referred to as an erasing power) lower than the recording power by a recording signal and then irradiating onto a signal track. The overwrite itself requires two levels: a recording power level and a bias power level, but if recording, erasion, and reproduction are taken into consideration, there will be required three levels: a recording power level, a bias power level, and a reproducing power level.

For example, in crystalline-amorphous phase change type optical disks, the region irradiated with a recording level is rapidly cooled after melting, whether the original state is amorphous or crystalline, and therefore the region becomes amorphous. The region irradiated with an erasing level rises to more than a crystallizing temperature, so it is crystallized regardless of the original state and a new signal is overwritten.

On the other hand, in a recording reproduction unit for optical disks, there are mainly two methods of rotating an optical disk: a method (CLV) of rotating a disk so that linear velocities are the same at the inner and outer circumferences of the disk and a method (CAV) of rotating a disk at a constant angular velocity.

For example, in the case where high-speed access is required like data files which are employed in the external memory for computers, CAV is used because it takes time to vary the number of revolutions of the disk. In this case the linear velocity in the circumferential direction of the disk becomes faster at the outer circumference and slower at the inner circumference.

Also, there are two types of recording modulation: mark spacing modulation (also referred to as mark position modulation) and mark length modulation(also referred to as mark edge modulation).

Mark spacing modulation recording varies mark spacing to perform recording and, when reproducing, detects the position of a mark to detect a signal.

Mark length modulation recording records marks with various lengths at various mark spacings and, when reproducing, detects the positions of both ends of a mark to detect a signal. Mark length modulation systems can have high density which is theoretically twice that of mark spacing modulation systems.

Laser recording onto phase change type optical disks is theoretically heat mode recording, so in the case where a long mark is recorded, the trailing end of a mark becomes thicker than the leading end due to a heat accumulation effect and the mark is distorted in the form of a tear drop, and consequently, a reproduced waveform is also distorted and the positions of both ends of the mark will be shifted.

Therefore, in the aforementioned mark length modulation system, there has been proposed a recording method (also referred to as multi-pulse recording) which constitutes a recording waveform for forming a single record mark by a recording pulse train which consists of a plurality of pulses (for example, Japanese Patent Laid-Open Application No. 3-185628). With this, as compared with a method of recording by a single pulse, the heat that a recording film receives can be controlled, so the configuration of a mark is not asymmetrical with respect to the leading and trailing edges of the mark as in the case of a single pulse, and the mark configuration becomes satisfactory.

However, even in a multi-pulse recording system such as the aforementioned, if mark spacing is narrowed for a high-density requirement, thermal interference will arise between marks and therefore the length or configuration of the mark will be varied.

As a method of improving this, Japanese Patent Laid-Open Application No. 7-129959, for example, has been proposed. In the publication, the amount of thermal interference is predicted and, in the aforementioned multi-pulse recording, the positions of the start portion and the end portion of a recording pulse train are changed by the length of a mark to be recorded and the spacing between marks so that thermal interference between marks is suppressed and that signal characteristics are made satisfactory.

Also, in 1-beam overwrite there has been provided a recording method which modulates a recording pulse into three stages: a recording power, a bias power, and a power provided immediately after the recording power and lower than the bias power (for example, Japanese Patent Laid-Open Application No. 63-113938).

Furthermore, in multi-pulse recording systems there has also been proposed a recording method which adds laser light irradiation at a power lower than a bias power (for example, Japanese Patent Laid-Open Application No. 6-295440).

Also, there has been proposed a recording method where irradiation time at a cooling power (hereinafter referred to as cooling-power irradiation time) is varied by mark spacing (for example, Japanese Patent Application No. 5-80491).

In the case where light from a light source such as a semiconductor laser, for example, is irradiated to a so-called optical disk (such as an optical disk using a rewritable phase change material) to cause physical state change so that a signal is recorded, the temperature of a recording layer reaches several hundred degrees and a thin film for recording is molten, by heat resulting from the light of the light source.

Therefore, by superposing the number of overwrites, that is, cycling the overwrite many times, signal degradation arises due to thermal damage.

The cause of the signal degradation includes the destruction of a dielectric layer or a recording layer and a phenomenon called the mass flow of a recording layer. The mass flow is a phenomenon where since a recording layer and its periphery reach high temperature while recording, the substance of the recording layer moves in the direction of a track by performing many cycles and therefore both a thick recording layer and a thin recording layer are produced on the same track. Consequently, the reproduced signal waveform will collapse and a signal cannot be reproduced at that portion. In any event, when the signal degradation due to many cycles is large, the applications of optical disks will be limited by the signal degradation.

Also, in the case where, in an optical disk unit, light is irradiated to cause physical state change by a semiconductor laser, for example, in the case where a signal is recorded in an optical disk employing a rewritable phase change material, the configuration of a recorded mark will vary depending upon the manner in which a recording layer heated by laser light is cooled.

That is, in the case where heat is held internally, a recording layer which was once molten will not be made amorphous but it will be crystallized. Consequently, a recorded mark becomes smaller or is distorted in shape, so the quality of a reproduced signal is degraded.

Then, in the case where a conventional cooling pulse is adopted, the heat staying at the rear end portion of a mark is reduced and therefore it becomes easy to make a record mark amorphous, but in some cases where the cooling speed is excessively increased at the rear end portion, the amorphous region will be larger than the front end portion of the mark.

Furthermore, there are cases where overwrite characteristics are degraded depending upon the conditions of a cooling power and the irradiation time. This is probably because a recorded mark is excessively enlarged laterally at the rear end and therefore mark distortion is rather caused or an unerased portion arises by overwrite.

In the case where higher-density recording is considered, the symmetry between the front end portion and the rear end portion of a mark is not sufficient, so a jitter, reproduced after overwriting, is large and the quality of a reproduced signal is not sufficient.

Also, in mark spacing modulation recording, by adding a cooling pulse, a large mark is formed and a C/N ratio is increased so that satisfactory signal quality can be realized. Here, the C/N ratio is a ratio between a carrier level and a noise level.

However, depending upon the condition of the cooling power, sometimes overwrite characteristics are degraded. This is probably because a record mark is excessively enlarged in the lateral direction and therefore an unerased portion arises by overwrite.

In prior art document EP-A-0594425 an optical recording method is disclosed where the laser beam intensity radiated onto a recording medium is raised from an intensity Pₚᵣₑ to P_{w1} higher than Pₚᵣₑ, then reduced to P_{LT} being lower than P_{W1} after a time T_{W1}. Then the laser is modulated between P_{LT} and P_{W2} with P_{W2} higher than P_{LT} so as to form a mark on the optical recording medium. Thereafter, the intensity is reduced to P_{LB} being lower than any of the previous powers and after an elapse of time T_{off}, the intensity is raised to Pₚᵣₑ.

Post-published document US 5490126 with the corresponding pre-published document JP-A-7129959 shows the shifting of the start end pulse and the termination end pulse corresponding to lengths of the mark and the space.

The present invention provides a recording method capable of finely controlling heat cooling conditions at the rear end of a recorded mark so that the mark can be formed into a desired shape, further enhancing the quality of a reproduced signal, and alleviating thermal damage so that satisfactory cycle characteristics can be obtained.

This object is solved by the method of claim 1. Preferred embodiments are disclosed in the dependent claim.

According to the optical information recording method of the present invention, the rear end portion of a record mark can be formed into a desired shape and therefore satisfactory reproduced signal characteristics are obtainable. In addition, in accordance with the optical information recording method of the present invention, thermal damage can be considerably alleviated, so satisfactory cycle characteristics are obtainable.

### BRIEF DESCRIPTION OF THE DRAWINGS

FIG. 1 is a diagram of a recording waveform used in one embodiment and examples for a better understanding of the present invention;
FIG. 2 is a structural diagram of an optical disk used in one embodiment of the present invention;
FIG. 3 is a diagram of an optical disk unit used in one embodiment of the present invention;
FIG. 4 is a diagram of a recording pulse train used in one embodiment and examples for a better understanding of the present invention;
FIG. 5 is a diagram of a recording waveform used in one embodiment and examples for a better understanding of the present invention;
FIG. 6 is a diagram of a recording waveform used in one embodiment and examples for a better understanding of the present invention;
FIG. 7 is a diagram of a recording waveform used in one embodiment and examples for a better understanding of the present invention;
FIG. 8 is a diagram of a recording waveform used in one embodiment and examples for a better understanding of the present invention;
FIG. 9 is a diagram of a recording waveform used in one embodiment and examples for a better understanding of the present invention;
FIG. 10 is a diagram of a recording waveform used in one embodiment and examples for a better understanding of the present invention;
FIG. 11 is a block diagram of a disk storage unit used in one embodiment and examples for a better understanding of the present invention;
FIG. 12 is a signal waveform diagram of each part of the disk storage unit used in one embodiment and examples for a better understanding of the present invention;
FIG. 13 is a block diagram of a disk storage unit used in one embodiment and examples for a better understanding of the present invention;
FIG. 14 is a signal waveform diagram of each part of the disk storage unit used in one embodiment and examples for a better understanding of the present invention; and
FIG. 15 is a diagram of a recording waveform used in one embodiment and examples for a better understanding of the present invention.

### (Description of symbols)

- 1: data
- 2: start edge pulse
- 5: burst gate signal
- 7: end edge pulse
- 9: 2T-mark signal
- 10: 2T-space signal
- 12: select signal
- 13: plurality of start edge set values
- 15: selected start edge set value
- 18: delayed start edge pulse
- 19: plurality of end edge set values
- 21: selected end edge set value
- 24: delayed end edge pulse
- 25: clock
- 26: AND gate
- 27: burst pulse
- 28: OR gate
- 29: recording signal
- 30: recording-current source
- 31: bias current source
- 32: light reproducing current source
- 33: switch
- 34: switch
- 35: laser diode
- 38: inverter
- 39: hold start edge set value
- 41: cooling pulse
- 42: delayed cooling pulse
- 43: delayed cooling pulse (inverted)
- 45: hold end edge set value
- 36: cooling-pulse generation circuit
- 37: cooling-pulse delay line
- 51: substrate
- 52: first dielectric layer
- 53: recording layer
- 54: second dielectric layer
- 55: reflecting layer
- 56: protective layer
- 61: optical disk
- 62: spindle motor
- 63: optical head
- 64: laser drive circuit
- 65: waveform correction circuit

### BEST MODE FOR CARRYING OUT THE INVENTION

In mark length modulation recording, the recording method of the present invention and of examples for a better understanding of the present invention:

(A) Performs laser light irradiation at a bias power between a recording pulse train and the start of laser light irradiation at a cooling power.

(B) Varies cooling-power irradiation time or laser light irradiation start time which is performed at a cooling power, in accordance with the length of a record mark.

(C) Only when the length of a record mark is shorter than a predetermined length, varies cooling-power irradiation time or laser light irradiation start time which is performed at a cooling power.

(D) Only when the length of a record mark is shorter than a predetermined length, adds a cooling pulse which has a constant cooling-power irradiation time and laser light irradiation start time.

(E) Only when an optical disk is rotated at a constant angular velocity and when a mark less than a predetermined length is recorded in the inner circumferential portion of the disk, adds a cooling pulse.

(F) When an optical disk is rotated at a constant angular velocity, varies cooling-power irradiation time and cooling-power irradiation start time in accordance with the radius of the disk.

Also, in mark spacing modulation recording, the recording method of the present invention:

(G) Performs laser light irradiation at a bias power until the start of laser light irradiation at a recording power and a cooling power.

(H) When an optical disk is rotated at a constant angular velocity, varies cooling-power irradiation start time in accordance with the radius of the disk.

Since the present invention has either structure, it can suppress the asymmetry between the configurations of the front and rear end portions of a mark, form the mark into a desired shape, and realize the satisfactory quality of a reproduced signal.

Then, in the case where, in mark length modulation recording, a recording pulse train comprises a start edge pulse, an end edge pulse, and pulses which are switched alternately with a cycle less than one cycle of a data clock between the start edge and end edge pulses, the recording method of the present invention:

(I) Performs laser light irradiation at a bias power after the end edge pulse of the aforementioned recording pulse train.

(J) Between the end edge pulse of the aforementioned recording pulse train and the laser light irradiation at a cooling power, performs laser light irradiation at a bias power.

In addition, in the case where, in mark length modulation recording, a recording pulse train comprises a start edge pulse, an end edge pulse, and pulses which are switched alternately with a cycle less than one cycle of a data clock between the start edge and end edge pulses and where the positions of the start edge pulse and the end edge pulse of said recording pulse train are changed in accordance with the length of the record mark and the spacing between the record marks:

(K) Laser light irradiation time at a bias power is constant, and regardless of the position of the start edge pulse or the end edge pulse of the recording pulse train, the time up to the laser light irradiation which is performed at a cooling power is constant after the start of the laser light irradiation of the end edge pulse of the recording pulse train, or the timing of the laser light irradiation start time at the cooling power is based on a clock.

Since the present invention has either structure, the positions of the start edge pulse and the end edge pulse are changed, whereby a fluctuation in the length of a mark due to thermal interference between record marks is suppressed. Therefore, high-density recording is possible, and at the same time, by making part of a bias level into a cooling power, total energy can be reduced during recording of a thin recording film, and signal degradation due to thermal damage in the case of a multi-cycle can be alleviated and satisfactory cycle characteristics can also be realized.

Also, the storage unit of the present invention comprises: a start edge pulse generation circuit which generates a start edge pulse having a constant width at a start edge position of the high period of the data; a burst gate generation circuit which generates a burst gate signal at a middle position of the mark when the high period of the data is long and which generates no burst gate signal when the high period of the data is short; an end edge pulse generation circuit which generates an end edge pulse having a constant width at an end edge position of the high period of the data; a mark/space length detection circuit which generates an nT mark signal including said start edge pulse and said end edge pulse when the high period of the data has n clocks and which generates an mT mark signal including said end edge pulse and said start edge pulse of both edges of the space when the low period of the data has m clocks (where n and m are natural numbers existing in a data string); an encoder which generates a select signal, which is for controlling a start edge selector to be described later and an end edge selector to be described later, from said nT mark signal and said mT mark signal; a cooling-pulse generation circuit which generates a cooling pulse having a constant width from a delayed end edge pulse which is from a programmable end edge delay line to be described later; the start edge selector which selects and outputs one from a plurality of start edge values by said selector signal; a start edge sample/hold circuit which updates a start edge set value output of said start edge selector only when said start edge pulse appears and which holds a previous value when no start edge pulse appears; a programmable start edge delay line which varies a quantity of delay by the start edge set value of the output of said start edge sample/hold circuit and which outputs a delayed start edge pulse where said start edge pulse is delayed; a cooling-pulse delay line which varies a quantity of delay of the cooling pulse, which is output from the cooling-pulse generation circuit, and outputs a delayed cooling pulse; the end edge selector which selects and outputs one from a plurality of end edge values by said selector signal; an end edge sample/hold circuit which updates an end edge set value output of said end edge selector only when said end edge pulse appears and which holds a previous value when no end edge pulse appears; and the programmable end edge delay line which varies a quantity of delay by the end edge set value of the output of said end edge sample/hold circuit and then delays said end edge pulse and which outputs a delayed end edge pulse where said end edge pulse is delayed.

(L) By inputting the delayed end edge pulse from the programmable end edge delay line to this cooling-pulse generation circuit, a cooling pulse is generated.

(M) By inputting the end edge pulse from the programmable end edge delay line to this cooling-pulse generation circuit, a cooling pulse is generated.

Therefore, with the same operation as the aforementioned recording method, the present invention can provide a unit which can reduce total energy during recording of a thin recording film, alleviate signal degradation caused by the thermal damage in the case of a multi-cycle, and have satisfactory cycle characteristics.

Furthermore, in mark length modulation recording, the recording method of the present invention:

(N) After a recording pulse train for forming a single record mark, provides a pulse train as a cooling pulse which irradiates laser light by at least two different powers which include powers smaller than the bias power.

(O) Provides a mark's rear end correction pulse train as a cooling pulse which has a period where, after the laser light irradiation in the recording pulse train, the laser light power is varied continuously to a power less than a bias power.

(P) Between the recording pulse train and the mark's rear end correction pulse train which is as a cooling pulse, performs laser light irradiation by a bias power.

(Q) Varies the start time of the mark's rear end correction pulse train as a cooling pulse or the pulse configuration of the mark's rear end correction pulse train as a cooling pulse in accordance with the length of a mark to be recorded.

(R) When an optical disk is rotated at a constant angular velocity, varies the start time of the mark's rear end correction pulse train or the pulse configuration of the mark's rear end correction pulse train in accordance with the radial position of the disk.

Since the present invention has either structure, it can suppress the asymmetry between the configurations of the front and rear end portions of a mark, form the mark into a desired shape, and realize the satisfactory quality of a reproduced signal.

The present invention will hereinafter be described in further detail with the drawings and specific embodiments of the present invention.

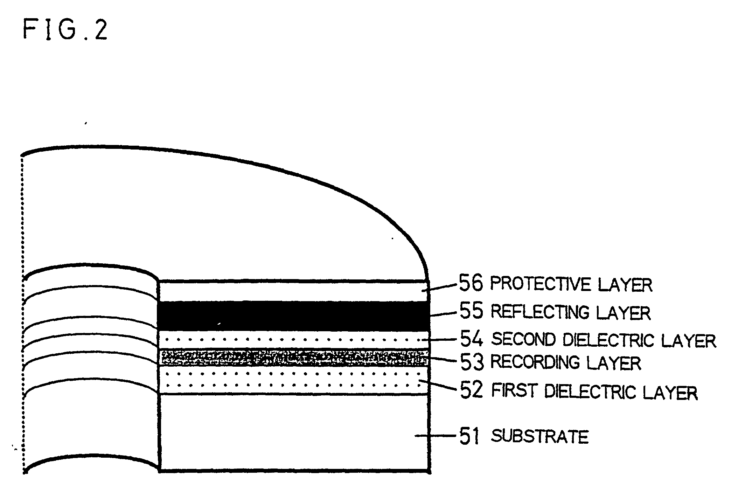

The structure of a disk used in an embodiment of the present invention will be described with Fig. 2. A dielectric layer, a recording layer, and a reflecting layer are formed on a transparent substrate 51 with a general thin-film formation method such as vacuum deposition or sputtering. On the substrate 51, a first dielectric layer 52, a recording layer 53, a second dielectric layer 54, and a reflecting layer 55 are provided in sequence. Furthermore, there is provided a protective layer 56 attached fast to the reflecting layer 55. Also, even an optical disk with a structure having no reflecting layer 55 or no protective layer 56 is applicable as an optical disk. Laser light for performing recording and reproduction is incident from the side of the substrate 51.

The material of the substrate 51 can use glass, quartz, polycarbonate, or polymethyl methacrylate. Also, the substrate may be a smooth plate or a plate having groove-shaped tracking-guide unevenness on its surface.

The protective layer 56 can use a layer obtained by coating and drying resin dissolved in a solvent or a plate bonded with an adhesive agent.

As a recording layer material which is employed in the recording layer 53, there is well known a chalcogen alloy which changes between an amorphous phase and a crystalline phase. For example, a SbTe system, a GeSbTe system, a GeSbTeSe system, a GeSbTePd system, a TeGeSnAu system, an AgSbTe system, a GeTe system, a GaSb system, an InSe system, an InSb system, an InSbTe system, an InSbSe system, an InSbTeAg and so forth can be used, and also an alloy, including other elements in a range which has no influence on the phase change characteristic or optical characteristics of an alloy of the aforementioned system, can be used.

The dielectric layers 52 and 54 can use SiO₂, SiO, TiO₂, MgO, Ta₂O₅, Al₂O₃, GeO₂, Si₃N₄, BN, AlN, SiC, ZnS, ZnSe, ZnTe, PbS, or a mixture of these.

The reflecting film 55 can use a material mainly comprised of metal material such as Au, Al, Cu, Cr, Ni, and Ti, or a mixture of these, and furthermore, the film 55 can use a dielectric multilayered film having a large reflectance at a predetermined wavelength.

Among the aforementioned materials, a disk used in the following embodiments of the present invention employs a substrate having a polycarbonate signal recording track with a size of φ130 mm, and on the substrate, a ZnS-SiO₂ mixed film was formed to a thickness of 1300Å as a first dielectric layer by sputtering.

Also, the composition of the recording layer of a disk used in the following embodiments 1 and 2 is Ge₂₂Sb₂₄Te₅₄, and the composition of the recording layer of a disk used in embodiments 3 through 18 is Ge₂₁Sb₂₆Te₅₃. The recording layer was formed to a thickness of 250Å, and a ZnS-SiO₂ mixed film was formed to a thickness of 200Å as a second dielectric layer. For the reflecting layer, an Al film was formed to a thickness of 1500Å by sputtering. And, a polycarbonate protective film was provided on the reflecting layer.

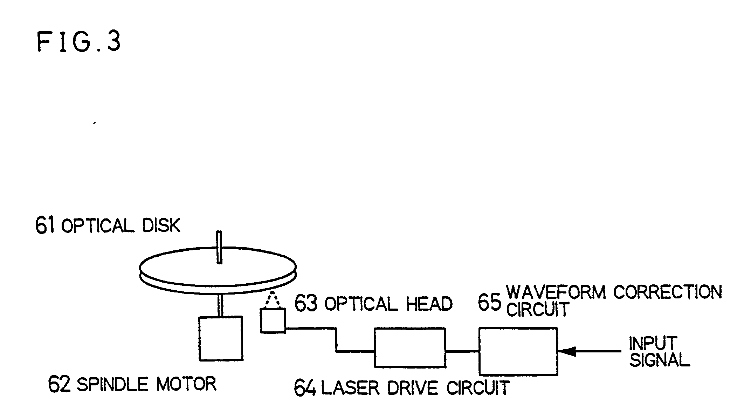

Now, for an optical disk unit employed in all embodiments of the present invention to be described later, a description will be made with Fig. 3. An optical disk 61 is attached to a spindle motor 62 and is rotatable. An optical head 63 uses a semiconductor laser as a light source and forms a laser spot on the optical disk by a collimator lens and an objective lens.

The semiconductor laser is driven by a laser drive circuit 64, but in the case where a signal is recorded, the waveform of an input signal is corrected by a waveform correction circuit 65, and then the corrected signal is input to the laser drive circuit 64.

In general, in terms of cost it is undesirable to make the waveform correction circuit intricate. Hence, for waveform correction, it is considered to be beneficial to vary a pattern which is as simple as possible. For example, it is beneficial not to vary the recording waveforms for all mark lengths but to vary only the recording waveform for a predetermined mark length.

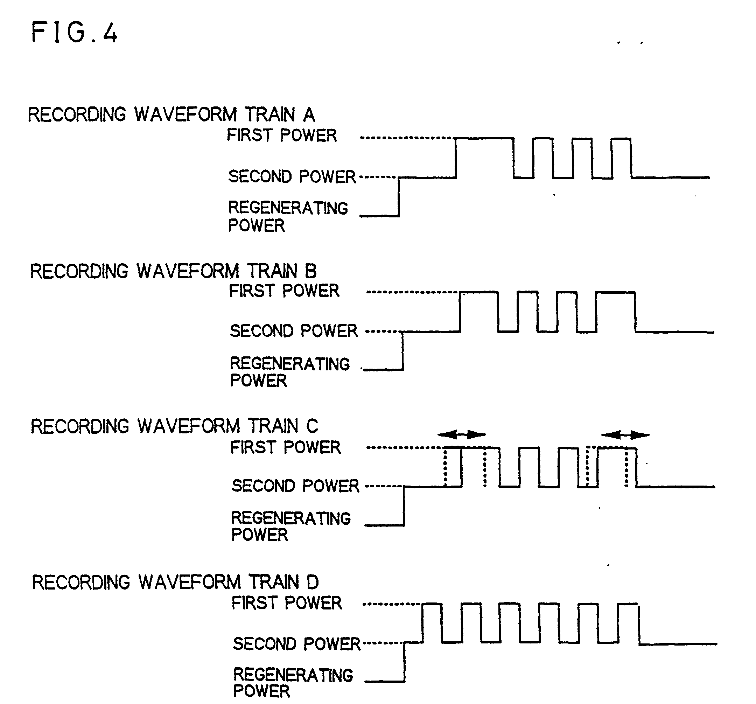

A configuration of a specific recording pulse train used in an embodiment is shown in Fig. 4. However, in the recording pulse trains A through D of Fig. 4, there are shown typical recording pulse trains used when, in mark length modulation recording, a 6T mark is recorded.

Note that in the mark length modulation recording of the embodiments of the present invention, there are shown the results which were all performed when the first power of laser light is taken to be a recording power, the second power is taken to be a bias power, and the lowest power of a mark's rear end correction pulse train as a cooling power or a cooling pulse is taken to be a reproducing power. Thus, if the first power is taken to be a recording power, the second power a bias power, and the lowest power a reproducing power, it will be desirable because particularly the structure of the waveform correction circuit can be simplified, but the powers of the laser light which are applied to the present invention are not limited to this. It is a matter of course that if the first power is a power greater than a recording power and the second power is a power lower than at least the first power and if the lowest power is a power lower than either the second power or the bias power, the powers can be freely set.

In Fig. 4 the recording pulse train A, in order to form a record mark, is a recording pulse train constituted by a start edge pulse, consisting of the first power 1.5T of laser light, and a pulse where the first and second powers are alternately switched at cycles of 0.5T. The T used herein denotes a clock.

The recording pulse train B, in order to form a record mark, is a recording pulse train constituted by a start edge pulse consisting of the first power 1.0T of laser light, a pulse where the first and second powers are alternately switched at cycles of 0.5T, and an end edge pulse consisting of the first power 1.0T.

The recording pulse train C has the same structure as the recording pulse train B, and according to the length of a mark to be recorded and the front and rear spacings of the mark, the positions of the start edge pulse and the end edge pulse of the recording pulse train are changed.

The recording pulse train D, in order to form a record mark, is a recording pulse train constituted by a pulse where the first and second powers of laser light are alternately switched at cycles of 0.5T.

Note that it is a matter of course that the pulse width (start edge pulse width, end edge pulse width, pulse width between start edge and end edge pulses, pulse width of the recording pulse train in the case of the recording pulse train D, etc.) of a recording pulse train which adapts to the present invention can be freely set.

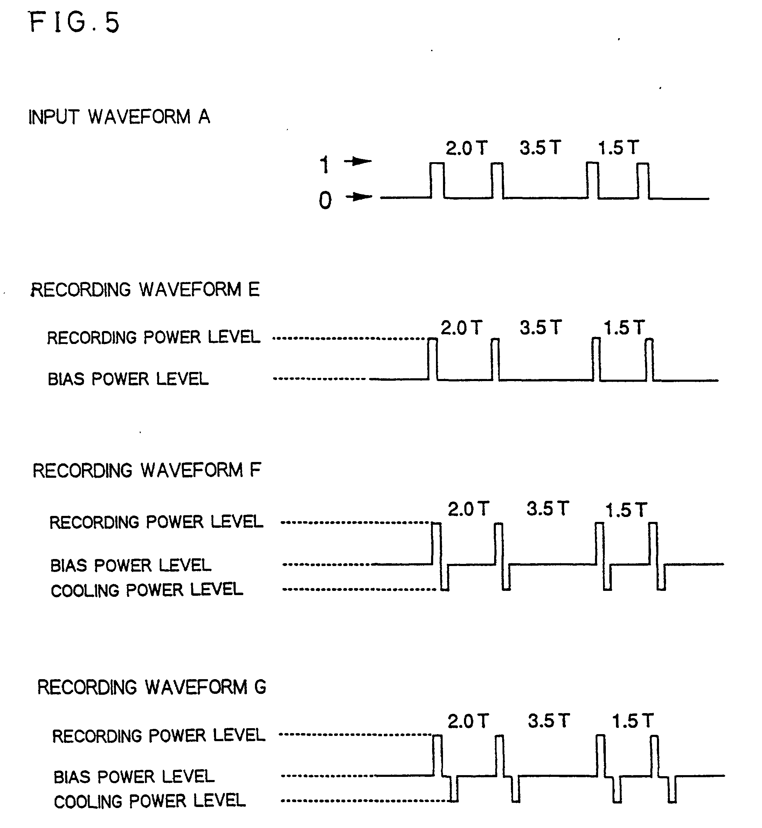

Also, in Fig. 5 there is shown a configuration of a specific recording waveform adopted in embodiments of the present invention in the case where, in mark spacing modulation recording, a cooling pulse is added.

An input waveform A is an example of a (2, 7) modulation method. The width of a mark in this case is 0.5T. Here, there is shown the case where mark spacings are 2.0T, 3.5T, and 1.5T.

A recording waveform E is the case of recording the input waveform A, and the recording pulse width is 0.25T.

A recording waveform F is the case of recording the input waveform A, and a cooling power level is irradiated immediately after irradiation of a recording power. The width of the recording pulse is 0.25T and the cooling-power irradiation time is 0.25T.

A recording waveform G is the case of recording the input waveform A. After irradiation of a recording power level, irradiation at a bias power level is performed, and then irradiation a cooling power level is performed. The width of the recording pulse is 0.25T, the cooling-power irradiation time is 0.25T, and the cooling-power start time is 0.25T.

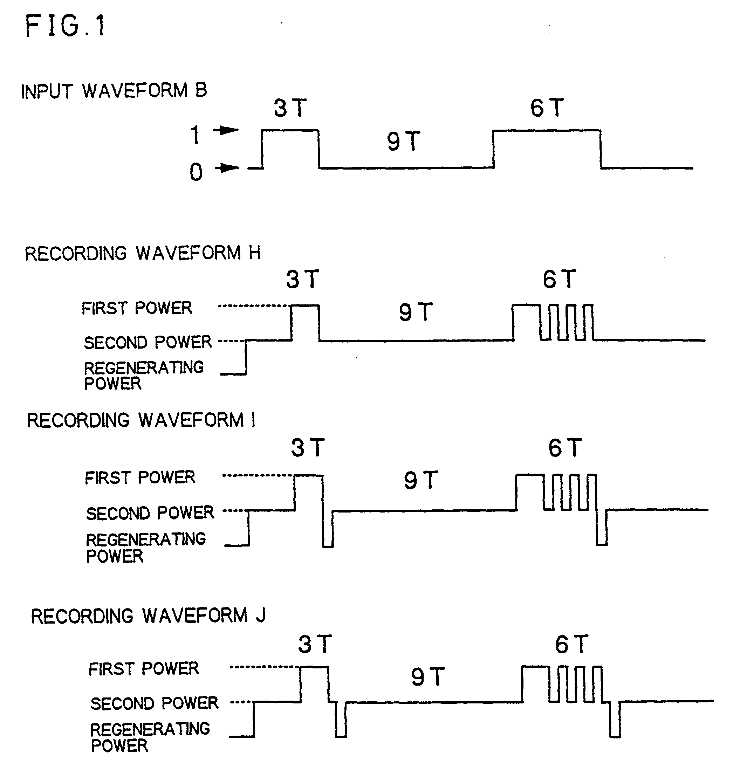

Also, in Fig. 1 there is shown a configuration of a specific recording waveform adopted in embodiments of the present invention in the case where, in mark length modulation recording, a cooling pulse is added. In Fig. 1 there is shown the case where the recording pulse train A of Fig. 4 is employed.

An input waveform B is an example of the input waveform of an EFM (Eight to Fourteen Modulation) signal. EFM modulation modulates data by a combination of signals having lengths of 9 kinds between 3T and 11T. The T used herein means a clock.

A recording waveform H is the case of recording the input waveform B and is the case where no cooling pulse is added.

A recording waveform I is a recording waveform where a cooling pulse is added in the case of recording the input waveform B. Regardless of the length of an immediately prior mark, the cooling-power irradiation time and the cooling-power start time are set to constant values (0.5T and 0) and are added.

A recording waveform J is a recording waveform where a cooling pulse is added in the case of recording the input waveform B. Regardless of the length of an immediately prior mark, the cooling-power irradiation time and the cooling-power start time are set to constant values (0.5T and 0.25T) and are added.

The present invention will hereinafter be described in further detail with specific embodiments and examples for a better understanding of the invention.

### (Example 1)

In this example for a better understanding of the invention a description will be made of the case where, in mark spacing modulation, laser light irradiation at a bias power has been performed between laser light irradiations at recording and cooling powers.

For the evaluation conditions of an optical disk, the wavelength of the laser light is 680 nm and the numerical aperture (NA) of the objective lens of the optical head used for the recording and reproduction of the recording unit is 0.55. For (2, 7) modulation, clock T is set so that the shortest mark pitch becomes 2.1 µm. By 1-beam overwrite, recording is performed 100 times, and a reproduced signal is differentiated and peak detection is performed. The jitter value, σsum/Tw (%), of the detected signal was measured. Here, σ is the jitter standard deviation and Tw is the window width of the detecting system. The linear velocity is 6.0 m/s.

On this disk, for signal recording ,a recording power ,where the C/N ratio saturates when a single frequency where mark pitch becomes 2.1 µm is recorded, is taken to be a recording power, and the power of the center value of a power margin ,where the erasion rate exceeds -20 dB in the case where the signal where the signal of the mark pitch is overwritten with a signal frequency equivalent to mark pitch 5.6 µm, is set and taken to be a bias power.

The recording waveforms used in this example and jitters are shown in Tables 1 and 2, respectively.

**[Table 1]**

| Recording waveform | 1-1 | 1-2 | 1-3 |
|---|---|---|---|
| Cooling-power irradiation time | 0T | 0.25T | 0.25T |
| Cooling-power start time | 0T | 0T | 0.20T |

**[Table 2]**

| Recording waveform | 1-1 | 1-2 | 1-3 |
|---|---|---|---|
| Jitter | 10.5% | 9.2% | 8.5% |

The recording waveform 1-1 of Table 1 is the case where no cooling pulse is added, like the recording waveform E of Fig. 5. The recording waveform 1-2 is the case where a cooling pulse is added immediately after laser light irradiation at a recording power, like the recording waveform F of Fig. 5. However, the cooling-power irradiation time at that time is 0.25T. Also, the recording waveform 1-3 is the case where irradiation at a bias power is performed after irradiation at a recording power and, thereafter, irradiation at a cooling power is performed, like the recording waveform G of Fig. 5. However, the cooling-power irradiation time at that time is 0.25T and the cooling-power start time is delayed by 0.20T after the end of irradiation at a recording power.

From Table 2, for the case of the recording waveform 1-1, the jitter has gotten worse in comparison with other recording waveforms. For the case of the recording waveform 1-2, the jitter has been improved as compared with the recording waveform 1-1 but is worse in comparison with the recording waveform 1-3. That is, for the recording waveform 1-3 of the present invention where the cooling-power start time was delayed, the jitter is improved in comparison with other recording waveforms.

As described above, the recording where jitters are small becomes possible by delaying the start of a cooling pulse in mark spacing modulation.

In this example, while the case of the reproducing power has been taken as an example of a cooling power, similar results were also obtained for the case where a cooling power is between a bias power and a laser-off level.

### (Example 2)

In this example for a better understanding of the invention a description will be made of the case where an optical disk is rotated at a constant angular velocity and where, when recording is performed in mark spacing modulation, cooling-power start time is varied according to the radius of the disk.

For the evaluation conditions, the number of revolutions of the disk is constant (1500 rpm). For a (2, 7) modulation signal, clock T is varied so that the shortest mark pitch becomes 2.1 µm at all times. By 1-beam overwrite, recording is performed 100 times, and the jitter value, σsum/Tw (%), was measured at the positions when the radius of the disk is at 23, 30, 37, 43, 50, and 57 mm. Here, σ is the jitter standard deviation and Tw is the window width of the detecting system. The linear velocities at the respective radii are about 3.6, 4.7, 5.8, 6.8, 7.9, and 9.0 m/s. Note that the disk and the other measurement conditions are the same as the example 1.

The recording waveforms used in this example and jitters are shown in Tables 3 and 4, respectively.

**[Table 3]**

| Recording waveform | 2-1 | 2-2 | 2-3 |
|---|---|---|---|
| Cooling-power irradiation time | 0T | 0.30T | 0.30T |
| Cooling-power start time | 0T | 0T | 0.10T |

**[Table 4]**

| Radius | Recording waveform 2-1 | Recording waveform2-2 | Recording waveform 2-3 |
|---|---|---|---|
| 23 mm | 14.1% | 10.5% | 11.2% |
| 30 mm | 12.2% | 9.7% | 10.5% |
| 37 mm | 11.3% | 9.3% | 9.8% |
| 43 mm | 10.5% | 9.4% | 8.9% |
| 50 mm | 10.8% | 10.0% | 9.2% |
| 57 mm | 11.4% | 10.7% | 9.7% |

The recording waveform 2-1 of Table 3 is the case where no cooling pulse is added, like the recording waveform E of Fig. 5. The recording waveform 2-2 is the case where laser light irradiation at a cooling pulse is performed after laser light irradiation at a recording power, like the recording waveform F of Fig. 5. However, the cooling-power irradiation time at that time is 0.30T. Also, the recording waveform 2-3 is the case where irradiation at a bias power is performed after irradiation at a recording power and, thereafter, irradiation at a cooling power is performed, like the recording waveform G of Fig. 5. However, the cooling-power irradiation time at that time is 0.30T and the cooling-power start time is after 0.10T after the end of irradiation at a recording power.

From Table 4, for the case of the recording waveform 2-1, the jitter has gotten worse at the inner and outer circumferences of the disk in comparison with other recording waveforms. In the case of the recording waveform 2-2, the jitter has been improved at the inner circumferential portion of the disk. Also, in the case of the recording waveform 2-3, the jitter has gotten worse at the inner circumferential portion of the disk in comparison with the recording waveform 2-2, but the jitter has been improved at the outer circumferential portion of the disk in comparison with the other recording waveforms.

From the foregoing, as in the present example, like that recording waveform 2-2, for example, is applied at the inner circumferential portion of the disk and that recording waveform 2-3, for example, is applied at the outer circumferential portion of the disk, by employing a recording waveform which quickens cooling-power start time at the inner circumferential portion of the disk, satisfactory recording of a reproduced jitter becomes possible.

As described above, in the case where an optical disk is rotated at a constant angular velocity, the recording where jitters are small over the entire circumference of the disk becomes possible by quickening the cooling-power start time at the inner circumferential portion of the disk.

In this example, as with the example 1, while the results have been shown for the case where a cooling power is a reproducing power, it is a matter of course that similar results are obtainable for the case where a cooling power is between a bias power and a laser-off level.

### (Embodiment 1 and examples for a better understanding of the invention)

In this embodiment and these examples a description will be made of the case where, in mark length modulation, laser light irradiation at a bias power has been performed between laser light irradiations at recording and cooling powers.

For the evaluation conditions of the optical disk, the wavelength of the laser light is 680 nm and the NA of the objective lens of the optical head used for the recording and reproduction of the recording unit is 0.55. For the 8-14 modulated (EFM modulated) input signal, clock T is set so that the shortest mark length becomes 0.90 µm. By 1-beam overwrite, recording is performed 100 times, and the jitter value, σsum/Tw (%), of the zero-cross point of the reproduced signal between 3T and 11T was measured. Here, σsum is the standard deviation of the total of jitters between 3T and 11T and Tw is the window width of the detecting system. The linear velocity is 4.0 m/s.

On this disk, for signal recording, a recording power, where the C/N ratio saturates when a single frequency where mark length becomes 0.9 µm is recorded, is taken to be a recording power, and the power of the center value of a power margin, where the erasion rate exceeds -20 dB in the case where the signal of the 3T mark is overwritten with a signal frequency equivalent to 11T, is set and taken to be a bias power.

The recording waveforms used in this embodiment and these examples and jitters are shown in Tables 5 and 6, respectively.

**[Table 5]**

| Recordi ng wavefor m | Mark length | 3T | 4T | 5T | 6T | 7T | 8T | 9T | 10T | 11T |
|---|---|---|---|---|---|---|---|---|---|---|
| 3-1 | Cooling-power irradiat ion time | 0T | 0T | 0T | 0T | 0T | 0T | 0T | 0T | 0T |
| | Cooling-power start time | 0T | 0T | 0T | 0T | 0T | 0T | 0T | 0T | 0T |
| 3-2 | Cooling-power irradiat ion time | 0.50T | 0.50T | 0.50T | 0.50T | 0.50T | 0.50T | 0.50T | 0.50T | 0.50 T |
| | Cooling-power start time | 0T | 0T | 0T | 0T | 0T | 0T | 0T | 0T | 0T |
| 3-3 | Cooling-power irradiat ion time | 0.50T | 0.50T | 0.50T | 0.50T | 0.50T | 0.50T | 0.50T | 0.50T | 0.50T |
| | Cooling-power start time | 0.20T | 0.20T | 0.20T | 0.20T | 0.20T | 0.20T | 0.20T | 0.20T | 0.20T |

**[Table 6]**

| | | | |
|---|---|---|---|
| Recording waveform | 3-1 | 3-2 | 3-3 |
| Jitter | 11.6% | 9.6% | 9.2% |

In Table 5, the cooling-power irradiation time and the cooling-power start time, in the case where marks with each mark length of between 3T and 11T are recorded, are shown every 3 kinds of recording waveforms.

In one example the recording pulse train A of Fig. 4 was employed.

The recording waveform 3-1 of Table 5 is the case where no cooling pulse is added, like the recording waveform H of Fig. 1. The recording waveform 3-2 is the case where laser light irradiation at a cooling power is performed immediately after a recording pulse train, like the recording waveform I of Fig. 1. However, the cooling-power irradiation time at that time is constant (0.5T) regardless of mark lengths 3T through 11T. Also, the recording waveform 3-3 is the case where irradiation at a bias power is performed immediately after a recording pulse train and, thereafter, irradiation at a cooling power is performed, like the recording waveform J of Fig. 1. However, the cooling-power irradiation time at that time and the cooling-power start time are 0.5T and 0.2T regardless of mark length.

From Table 6, for the case of the recording waveform 3-1, the jitter has gotten worse in comparison with other recording waveforms. In the case of the recording waveform 3-2, the jitter has been improved in comparison with the recording waveform 3-1. On the other hand, in the recording waveform 3-3 where the cooling-power start time is delayed, the symmetry between the front end and rear end portions of a mark is controlled more satisfactorily, so the jitter has become smaller in comparison with other recording waveforms.

As described above, the recording where jitters are small becomes possible by putting laser light irradiation at a bias power between the laser light irradiations of the recording and cooling powers.

In this embodiment and examples, while there has been shown the case where the cooling-power is a light reproducing power, similar results were also obtained for the case where the cooling power is between 0 and a power smaller than a bias power.

Also, in this embodiment and examples, while and examples there has been shown the case where the second power of a recording pulse train is a bias power, similar results were also obtained for the case where the second power is greater than 0 and less than a recording power.

Also, while the case of the recording pulse train A of Fig. 4 has been shown as a recording pulse train forming an example for a better understanding of the invention, similar results were also obtained for the cases of the recording pulse trains B, and D of Fig. 4 forming further examples. Pulse train C of Fig. 4 with wave form 3-2 forms an embodiment of the present invention waveforms 3-1 and 3-3 form examples for a better understanding of the invention.

### (Embodiment 2 and examples for a better understanding of the invention)

In this embodiment and these examples a description will be made of the case where only cooling-power irradiation time has been varied according to the length of a mark to be recorded.

The respective recording waveforms and jitters are shown in Tables 7 and 8, respectively. Note that the measurement conditions are the same as the embodiment 1 and those examples.

In Table 7, the cooling-power irradiation time and the cooling-power start time, in the case where marks with each mark length of between 3T and 11T are recorded, are shown every 4 kinds of recording waveforms.

In one example the recording pulse train A of Fig. 4 was employed.

The recording waveform 4-1 of Table 7 is the case where no cooling pulse is added, like the recording waveform H of Fig. 1. The recording waveform 4-2 is the case where cooling-power irradiation time is constant (0.10T) regardless of mark length and where the cooling-power irradiation time is immediately after a recording pulse train, like the recording waveform I of Fig. 1. Also, the recording waveform 4-3 is the case where irradiation at a cooling power is performed immediately after a recording pulse train, like the recording waveform I of Fig. 1. However, the cooling-power irradiation time at that time is 0.50T, which is longer than the recording waveform 4-2. Furthermore, the recording waveform 4-4 is the case where irradiation at a cooling power is performed immediately after a recording pulse train, like the recording waveform I of Fig. 1. The cooling-power irradiation time becomes longer as mark length becomes shorter.

**[Table 7]**

| Recording waveform | Mark length | 3T | 4T | 5T | 6T | 7T | 8T | 9T | 10T | 11T |
|---|---|---|---|---|---|---|---|---|---|---|
| 4-1 | Cooling-power irradiation time | 0T | 0T | 0T | 0T | 0T | 0T | 0T | 0T | 0T |
| | Cooling-power start time | 0T | 0T | 0T | 0T | 0T | 0T | 0T | 0T | 0T |
| 4-2 | Cooling-power irradiation time | 0.10 T | 0.10 T | 0.10 T | 0.10 T | 0.10 T | 0.10 T | 0.10 T | 0.10 T | 0.10 T |
| | Cooling-power start time | 0T | 0T | 0T | 0T | 0T | 0T | 0T | 0T | 0T |
| 4-3 | Cooling-power irradiation time | 0.50 T | 0.50 T | 0.50 T | 0.50 T | 0.50 T | 0.50 T | 0.50 T | 0.50 T | 0.50 T |
| | Cooling-power start time | 0T | 0T | 0T | 0T | 0T | 0T | 0T | 0T | 0T |
| 4-4 | Cooling-power irradiation time | 0.50 T | 0.45 T | 0.40 T | 0.35 T | 0.30 T | 0.25 T | 0.20 T | 0.15 T | 0.10 T |
| | Cooling-power start time | 0T | 0T | 0T | 0T | 0T | 0T | 0T | 0T | 0T |

**[Table 8]**

| Recording waveform | 4-1 | 4-2 | 4-3 | 4-4 |
|---|---|---|---|---|
| Jitter | 11.6% | 10.3% | 9.6% | 7.5% |

From Table 7, in the case of the recording waveform 4-1, the jitter has gotten worse in comparison with other recording waveforms. In the case of the recording waveforms 4-2 and 4-3, the jitter has been improved in comparison with the recording waveform 3-1 but is a bad value in comparison with the recording waveform 4-4.

On the other hand, in the recording waveform 4-4 of the present invention where the cooling-power irradiation time becomes longer as a record mark length becomes shorter, the symmetry between the front end and rear end portions of a mark is controlled more satisfactorily for each mark length, so the jitter value has been considerably improved in comparison with other recording waveforms.

As described above, the recording where jitters are small becomes possible by varying the cooling-power irradiation time in accordance with a record mark length.

In this embodiment and these examples, while there has been shown the case where the cooling power is a light reproducing power, similar results were also obtained for the case where the cooling power is between 0 and a power smaller than a bias power.

Also, in this embodiment and these examples, while there has been shown the case where the second power of a recording pulse train is a bias power, similar results were also obtained for the case where the second power is greater than 0 and less than a recording power.

Also, while the case of the recording pulse train A of Fig. 4 has been shown as a recording pulse train forming an example for a better understanding of the invention, similar results were also obtained for the cases of the recording pulse trains B, and D of Fig. 4 forming further examples. Pulse train C of Fig. 4 with waveforms 4-2, 4-3, 4-4 form embodiments of the invention. Waveform 4-1 forms an example for a better understanding of the invention.

### (Embodiment 3 and examples for a better undertanding of the invention)

In this embodiment and these examples a description will be made of the case where cooling-power irradiation time has been varied according to the length of a mark only when the mark length is shorter than a predetermined mark length.

The respective recording waveforms and jitters are shown in Tables 9 and 10, respectively. Note that the measurement conditions are the same as the embodiment 1 and those examples.

**[Table 9]**

| Recording waveform | Mark length | 3T | 4T | 5T | 6T | 7T | 8T | 9T | 10T | 11T |
|---|---|---|---|---|---|---|---|---|---|---|
| 5-1 | Coolingpower irradiation time | 0T | 0T | 0T | 0T | 0T | 0T | 0T | 0T | 0T |
| | Cooling-power start time | 0T | 0T | 0T | 0T | 0T | 0T | 0T | 0T | 0T |
| 5-2 | Cooling-power irradiation time | 0.50 T | 0.45 T | 0.40 T | 0.35 T | 0.30 T | 0.30 T | 0.30 T | 0.30 T | 0.30 T |
| | Cooling-power start time | 0T | 0T | 0T | 0T | 0T | 0T | 0T | 0T | 0T |
| 5-3 | Cooling-power irradiation time | 0.50 T | 0.45 T | 0.45 T | 0.45 T | 0.45 T | 0.45 T | 0.45 T | 0.45 T | 0.45 T |
| | Cooling-power start time | 0T | 0T | 0T | 0T | 0T | 0T | 0T | 0T | 0T |

**[Table 10]**

| Recording waveform | 5-1 | 5-2 | 5-3 |
|---|---|---|---|
| Jitter | 11.6% | 8.3% | 10.0% |

In Table 9, the cooling-power irradiation time and the cooling-power start time, in the case where marks with each mark length of between 3T and 11T are recorded, are shown every 3 kinds of recording waveforms.

In one example the recording pulse train A of Fig. 4 was employed.

The recording waveform 5-1 of Table 9 is the case where no cooling pulse is added, like the recording waveform H of Fig. 1. The recording waveform 5-2 is the case where immediately after irradiation of a recording pulse train, irradiation of a cooling power is varied only when mark length is shorter than mark length having 3T through 6T, like the recording waveform I of Fig. 1, and is the case where cooling-power irradiation time is made longer as a record mark length becomes shorter. Also, the recording waveform 5-3 is the case where cooling-power irradiation time is longer only when mark length is at 3T and where a cooling power is added immediately after irradiation of a recording pulse train.

From Table 10, in the case of the recording waveform 5-1, the jitter has gotten worse in comparison with other recording waveforms. On the other hand, in the case of the record mark lengths of 3T through 6T according to the present invention, in the recording waveform 5-2 where the cooling-power start time is made longer as the mark length becomes shorter, the jitter has been improved in comparison with the recording waveform 5-1.

Also, in the recording waveform 5-3 where cooling-power irradiation time is added only when the record mark length according to the present invention is at 3T, the jitter is larger in comparison with the recording waveform 5-2 but has been improved in comparison to the recording waveform 5-1.

As described above, the recording where jitters are small becomes possible by varying and adding the cooling-power irradiation time only when a record mark length is less than a predetermined record mark length. This recording waveform simplifies the structure of a recording circuit and is considered to be better in terms of cost.

In this embodiment and these examples, while there has been shown the case where the cooling power is a light reproducing power, similar results were also obtained for the case where the cooling power is between 0 and a power than a bias power.

Also, in this embodiment and these examples, while there has been shown the case where the second power of a recording pulse train is a bias power, similar results were also obtained for the case where the second power is greater than 0 and less than a recording power.

Also, while the case of the recording pulse train A of Fig. 4 has been shown as a recording pulse train forming an example for a better understanding of the invention, similar results were also obtained for the cases of the recording pulse trains B, and D of Fig. 4 forming further examples. Recording pulse train C of Fig. 4 with waveforms 5-2 and 5-3 form embodiments of the invention. Waveform 5-1 forms an example for a better understanding of the invention.

### (Embodiment 4 and examples for a better understanding of the invention)

In this embodiment and these examples a description will be made of the case where cooling-power irradiation time is constant regardless of mark length and where only cooling-power start time has been varied according to the length of a mark to be recorded.

The respective recording waveforms and jitters are shown in Tables 11 and 12, respectively. Note that the measurement conditions are the same as the embodiment 1 and those examples.

**[Table 11]**

| Recording wavefor m | Mark length | 3T | 4T | 5T | 6T | 7T | 8T | 9T | 10T | 11T |
|---|---|---|---|---|---|---|---|---|---|---|
| 6-1 | Cooling-power irradiation time | 0T | 0T | 0T | 0T | 0T | 0T | 0T | 0T | 0T |
| | Cooling-power start time | 0T | 0T | 0T | 0T | 0T | 0T | 0T | 0T | 0T |
| 6-2 | Cooling-power irradiation time | 0.50T | 0.50T | 0.50T | 0.50T | 0.50T | 0.50T | 0.50T | 0.50T | 0.50T |
| | Cooling-power start time | 0T | 0T | 0T | 0T | 0T | 0T | 0T | 0T | 0T |
| 6-3 | Cooling-power irradiation time | 0.50T | 0.50T | 0.50T | 0.50T | 0.50T | 0.50T | 0.50T | 0.50T | 0.50T |
| | Cooling-power start time | 0.40T | 0.40T | 0.40T | 0.40T | 0.40T | 0.40T | 0.40T | 0.40T | 0.40T |
| 6-4 | Cooling-power irradiation time | 0.50T | 0.50T | 0.50T | 0.50T | 0.50T | 0.50T | 0.50T | 0.50T | 0.50T |
| | Cooling-power start time | 0T | 0.05T | 0.10T | 0.15T | 0.20T | 0.25T | 0.30T | 0.35T | 0.40T |

**[Table 12]**

| | | | | |
|---|---|---|---|---|
| Recordin waveform | 6-1 | 6-2 | 6-3 | 6-4 |
| Jitter | 11.6% | 9.6% | 10.0% | 8.0% |

In Table 11, the cooling-power irradiation time and the cooling-power start time, in the case where marks of each mark length of between 3T and 11T are recorded, are shown every 4 kinds of recording waveforms. In one example the recording pulse train A of Fig. 4 was employed.

The recording waveform 6-1 of Table 11 is the case where no cooling pulse is added, like the recording waveform H of Fig. 1. The recording waveform 6-2 is the case where immediately after irradiation of a recording pulse train, irradiation of a cooling power is performed, like the recording waveform I of Fig. 1. However, the cooling-power irradiation time is 0.5T regardless of the length of a mark to be recorded. Also, the recording waveform 6-3 is the case where after irradiation of a recording pulse train, irradiation at a bias power is performed and, thereafter, irradiation at a cooling power is performed, like the recording waveform of Fig. 1. However, the cooling-power irradiation time is 0.50T and the cooling-power start time is 0.4T. The times are constant regardless of the length of a mark to be recorded. Furthermore, for the recording waveform 6-4, as with the recording waveform 6-3, the cooling-power irradiation time is 0.50T and constant regardless of mark length, but the cooling-power start time is quickened as the length of a mark becomes shorter.

From Table 12, in the case of the recording waveform 6-1, the jitter has gotten worse in comparison with other recording waveforms. In the case of the recording waveforms 6-2 and 6-3, the jitter has been improved in comparison with the recording waveform 6-1. On the other hand, in the recording waveform 6-4 of the present invention where the cooling-power start time is quickened as the length of a mark becomes shorter, the jitter becomes even smaller in comparison to other recording waveforms.

As described above, the recording where jitters are small becomes possible by varying the cooling-power irradiation time in accordance with the length of a mark to be recorded.

In this embodiment and these examples, while there has been shown the case where the cooling power is a light reproducing power, similar results were also obtained for the case where the cooling power is between 0 and a power less than a bias power.

Also, in this embodiment and these examples, while there has been shown the case where the second power of a recording pulse train is a bias power, similar results were also obtained for the case where the second power is greater than 0 and less than a recording power.

Also, while the case of the recording pulse train A of Fig. 4 has been shown as a recording pulse train forming an example for a better understanding of the invention, similar results were also obtained for the cases of the recording pulse trains B, and D of Fig. 4 forming further examples. Recording pulse train C of Fig. 4 with waveform 6-2 forms an embodiment of the invention. Waveforms 6-1, 6-3 and 6-4 form examples provided for a better understanding of the invention.

### Example 3

In this example for a better understanding of the invention a description will be made of the case where cooling-power irradiation time is constant and where cooling-power start time has been varied according to the length of a mark only when the mark length is shorter than a predetermined mark length.

The respective recording waveforms and jitters are shown in Tables 13 and 14, respectively. Note that the measurement conditions are the same as the embodiment 1 and those examples.

In Table 13, the cooling-power irradiation time and the cooling-power start time, in the case where marks with each mark length of between 3T and 11T are recorded, are shown every 3 kinds of recording waveforms. In this embodiment the recording pulse train A of Fig. 4 was employed.

The recording waveform 7-1 of Table 13 is the case where no cooling pulse is added, like the recording waveform H of Fig. 1. The recording waveform 7-2 is the case where after irradiation of a recording pulse train, irradiation at a bias power is performed and then irradiation at a cooling power is performed, like the recording waveform J of Fig. 1. Also, in the case where the length of a mark to be recorded has 3T through 6T, the cooling-pulse start time is quickened as the length of the mark becomes shorter. However, the cooling-power irradiation time is 0.50T and constant regardless of mark length.

**[Table 13]**

| Recording waveform | Mark length | 3T | 4T | 5T | 6T | 7T | 8T | 9T | 10T | 11T |
|---|---|---|---|---|---|---|---|---|---|---|
| 7-1 | Cooling-power irradiation time | 0T | 0T | 0T | 0T | 0T | 0T | 0T | 0T | 0T |
| | Cooling-power start time | 0T | 0T | 0T | 0T | 0T | 0T | 0T | 0T | 0T |
| 7-2 | Cooling-power irradiation time | 0.50 T | 0.50 T | 0.50 T | 0.50 T | 0.50 T | 0.50 T | 0.50 T | 0.50 T | 0.50 T |
| | Cooling-power start time | 0.00 T | 0.05 T | 0.10 T | 0.15 T | 0.20 T | 0.20 T | 0.20 T | 0.20 T | 0.20 T |
| | Cooling-power irradiation time | 0.50 T | 0.50 T | 0.50 T | 0.50 T | 0.50 T | 0.50 T | 0.50 T | 0.50 T | 0.50 T |
| 7-3 | Cooling-power start time | 0.00 T | 0.20 T | 0.20 T | 0.20 T | 0.20 T | 0.20 T | 0.20 T | 0.20 T | 0.20 T |

**[Table 14]**

| Recording waveform | 7-1 | 7-2 | 7-3 |
|---|---|---|---|
| Jitter | 11.6% | 8.4% | 9.0% |

Also, the recording waveform 7-3 is the case where a cooling pulse is performed immediately after irradiation of a recording pulse train, only when a mark with 3T is recorded, and where cooling-power start time is constant (0.20T) when a mark having 4T through 11T is recorded.

From Table 14, in the case of the recording waveform 7-1, the jitter has gotten worse in comparison with other recording waveforms. On the other hand, in the case of the mark having lengths of 3T through 6T for the recording waveform 7-2 where the cooling-pulse start time is quickened as the length of the mark becomes shorter, the jitter has been improved in comparison to the recording waveform 7-1. Also, in the recording waveform 7-3 where cooling-power start time is quickened only when the mark length has 3T, the jitter is larger in comparison with the recording waveform 7-2 but has been improved in comparison to the recording waveform 7-1.

As described above, the recording where jitters are small becomes possible by varying and adding the cooling-power start time only when the length of a mark is less than a predetermined mark length. This recording waveform simplifies the structure of a recording circuit and is considered to be better from the side of cost.

In this example, while there has been shown the case where the cooling power is a light reproducing power, similar results were also obtained for the case where the cooling power is between 0 and a power less than a bias power.

Also, in this example, while there has been shown the case where the second power of a recording pulse train is a bias power, similar results were also obtained for the case where the second power is greater than 0 and less than a recording power.

Also, in this example, while the case of the recording pulse train A of Fig. 4 has been shown as a recording pulse train, similar results were also obtained for the cases of the recording pulse trains B, C, and D of Fig. 4.

### (Example 4)

In this example for a better understanding of the invention a description will be made of the case where a cooling pulse with both a constant cooling-power irradiation time and a constant cooling-power start time is added only when a mark shorter than a predetermined length is recorded.

The respective recording waveforms and jitters are shown in Tables 15 and 16, respectively. Note that the measurement conditions are the same as the embodiment 1 and those examples.

**[Table 15]**

| Recording waveform | Mark length | 3T | 4T | 5T | 6T | 7T | 8T | 9T | 10T | 11T |
|---|---|---|---|---|---|---|---|---|---|---|
| 8-1 | Cooling-power irradiation time | 0T | 0T | 0T | 0T | 0T | 0T | 0T | 0T | 0T |
| | Cooling-power start time | 0T | 0T | 0T | 0T | 0T | 0T | 0T | 0T | 0T |
| 8-2 | Cooling-power irradiation time | 0.43 T | 0.43 T | 0.43 T | 0.43 T | 0T | 0T | 0T | 0T | 0T |
| | Cooling-power start time | 0.08 T | 0.08 T | 0.08 T | 0.08 T | 0T | 0T | 0T | 0T | 0T |
| 8-3 | Cooling-power irradiation time | 0.43 T | 0T | 0T | 0T | 0T | 0T | 0T | 0T | 0T |
| | Cooling-power start time | 0.08 T | 0T | 0T | 0T | 0T | 0T | 0T | 0T | 0T |

**[Table 16]**

| Recording waveform | 8-1 | 8-2 | 8-3 |
|---|---|---|---|
| Jitter | 11.6% | 8.7% | 9.8% |

In Table 15, the cooling-power irradiation time and the cooling-power start time, in the case where marks with each mark length of between 3T and 11T are recorded, are shown every 3 kinds of recording waveforms. In this example the recording pulse train A of Fig. 4 was employed.

The recording waveform 8-1 of Table 15. is the case where no cooling pulse is added, like the recording waveform H of Fig. 1. The recording waveform 8-2 is the case where only when the length of a mark to be recorded is between 3T and 6T, irradiation at a bias power is performed after irradiation of a recording pulse train, and then irradiation at a cooling power is performed, like the recording waveform J of Fig. 1. However, when mark length is between 3T and 6T, a cooling pulse with both a cooling-power irradiation time of 0.43T and a cooling-power start time of 0.08T is added. Also, the recording waveform 8-3 is the case where a cooling pulse with both a constant cooling-power irradiation time of 0.43T and a constant cooling-power start time of 0.08T is added only when the length of a mark to be recorded is 3T.

From Table 16, in the case of the recording waveform 8-1, the jitter has gotten worse in comparison with other recording waveforms. On the other hand, in the case of the recording waveform 8-2 of the present example for a better understanding of the invention, where a cooling pulse with a constant cooling-pulse width and a constant start time is added only when a mark less than a predetermined mark length is recorded, the jitter has been improved in comparison to the recording waveform 8-1. Also in the recording waveform 8-3 of the present example for a better understanding of the invention where a cooling pulse is added only when a mark with a shortest mark length is recorded, the jitter is worse in comparison with the recording waveform 8-2 but has been improved in comparison to the recording waveform 8-1.

As described above, the recording where jitters are small becomes possible by adding a cooling pulse having a constant pulse width and a constant start time only when a mark less than a predetermined mark length is recorded. This recording waveform simplifies the structure of a recording circuit and is considered to be better from the side of cost.

In this example, while there has been shown the case where the cooling power is a light reproducing power, similar results were also obtained for the case where the cooling power is between 0 and a power smaller than a bias power.

Also, in this example, while there has been shown the case where the second power of a recording pulse train is a bias power, similar results were also obtained for the case where the second power is greater than 0 and less than a recording power.

Also, in this example, while the case of the recording pulse train A of Fig. 4 has been shown as a recording pulse train, similar results were also obtained for the cases of the recording pulse trains B, C, and D of Fig. 4.

### (Example 5)

In this example for a better understanding of the invention a description will be made of the case where an optical disk is rotated at a constant angular velocity and where a cooling pulse is added only when a mark less than a predetermined mark length is recorded.

For the evaluation conditions, the number of revolutions of the disk is 1000 rpm). For an EFM signal, clock T is varied so that the shortest mark pitch becomes 0.9 µm at all times. By 1-beam overwrite, recording is performed 100 times, and the jitter value, σsum/Tw (%), of the zero-cross point of a reproduced signal between 3T and 11T was measured at the positions where the radius of the disk is at 23, 30, 37, 43, 50, and 57 mm. Here, σ is the jitter standard deviation and Tw is the window width of the detecting system. Also, the linear velocities at the respective radii are about 2.4, 3.1, 3.9, 4.5, 5.2, and 6.0 m/s. Note that the other measurement conditions are the same as the embodiment 1 and those examples.

The respective recording waveforms and jitters are shown in Tables 17 and 18, respectively.

In Table 17, the cooling-power irradiation time and the cooling-power start time, in the case where marks with each mark length of between 3T and 11T are recorded, are shown every 3 kinds of recording waveforms.

In this example the recording pulse train A of Fig. 4 was employed. The recording waveform 9-1 of Table 17 is the case where no cooling pulse is added, like the recording waveform H of Fig. 1.

**[Table 17]**

| Recording waveform | Mark length | 3T | 4T | 5T | 6T | 7T | 8T | 9T | 10T | 11T |
|---|---|---|---|---|---|---|---|---|---|---|
| 9-1 | Cooling-power irradiation time | 0T | 0T | 0T | 0T | 0T | 0T | 0T | 0T | 0T |
| | Cooling-power start time | 0T | 0T | 0T | 0T | 0T | 0T | 0T | 0T | 0T |
| 9-2 | Cooling-power irradiation time | 0.43 T | 0.43 T | 0.43 T | 0.43 T | 0T | 0T | 0T | 0T | 0T |
| | Cooling-power start time | 0.08 T | 0.08 T | 0.08 T | 0.08 T | 0T | 0T | 0T | 0T | 0T |
| 9-3 | Cooling-power irradiation time | 0.43 T | 0T | 0T | 0T | 0T | 0T | 0T | 0T | 0T |
| | Cooling-power start time | 0.08 T | 0T | 0T | 0T | 0T | 0T | 0T | 0T | 0T |

**[Table 18]**

| Radius | Recording waveform 9-1 | Recording waveform 9-2 | Recording waveform 9-3 |
|---|---|---|---|
| 23 mm | 14.0% | 11.5% | 12.8% |
| 30 mm | 13.3% | 9.8% | 10.8% |
| 37 mm | 11.8% | 9.0% | 10.0% |
| 43 mm | 10.9% | 10.5% | 10.7% |
| 50 mm | 11.4% | 12.2% | 11.8% |
| 57 mm | 12.3% | 13.4% | 12.5% |

The recording waveform 9-2 is the case where, only when a mark with a length of 3T through 6T is recorded, irradiation at a bias power is performed after irradiation of a recording pulse train and then irradiation at a cooling power is performed, like the recording waveform J of Fig. 1. However, the cooling-power irradiation time is 0.30T and the cooling-power start time is 0.08T, so the times are uniform. Also, in the case where a mark with 7T through 11T is recorded, a cooling pulse is not added. Also, the recording waveform 9-3 is the case where a cooling pulse is not added except for a mark having 3T, like the recording waveform H of Fig. 1. However, only when a mark with 3T is recorded, the cooling-power irradiation time is 0.43T and the cooling-power start time is 0.08T.

From Table 18, in the case of the recording waveform 9-1, the jitter has gotten worse particularly at the inner circumference of the disk in comparison with other recording waveforms. On the other hand, in the case of the recording waveform 9-2 where a cooling pulse was added when a short mark is recorded, the jitter has been improved at the inner circumferential portion of the disk in comparison with the recording waveform 9-1. Also, in the case of the recording waveform 9-3 where a cooling pulse was added when a 3T mark is recorded, the jitter has been improved at the inner circumferential portion of the disk. Therefore, for example, for the inner circumferential portion at a radius of 37 mm or up to 43 mm, the recording waveforms 9-2 and 9-3 can be employed, and for the outer circumferential portion than that, the recording waveform 9-1 can be used.

As in the present example for a better understanding of the invention, by employing the recording waveform 9-2 or 9-3 at the inner circumferential portion of the disk and the recording waveform 9-1 which does not add a cooling pulse at the outer circumferential portion, a satisfactory jitter is obtainable at any radius of the disk.

As described above, in the case where an optical disk is rotated at a constant angular velocity, a cooling pulse is added only when a mark shorter than a predetermined mark length is recorded on the inner circumferential portion of the disk inside a predetermined radius, whereby the recording where jitters are small becomes possible at any radius of the disk. This recording waveform simplifies the structure of a recording circuit and is considered to be better from the side of cost.

In this example, while there has been shown the case where the cooling power is a light reproducing power, similar results were also obtained for the case where the cooling power is between 0 and a power smaller than a bias power.

Also, in this example, while there has been shown the case where the second power of a recording pulse train is a bias power, similar results were also obtained for the case where the second power is greater than 0 and less than a recording power.

Also, in this example, while the case of the recording pulse train A of Fig. 4 has been shown as a recording pulse train, similar results were also obtained for the cases of the recording pulse trains B, C, and D of Fig. 4.

### (Embodiment 5 and examples for a better understanding of the invention)

In this embodiment and these examples a description will be made of the case where an optical disk is rotated at a constant angular velocity and where cooling-power irradiation time and cooling-power start time are varied according to the radius of the disk.

The respective recording waveforms and jitters are shown in Tables 19 and 20, respectively. Note that measurement conditions are the same as the example 5.

In Table 19, the cooling-power irradiation time and the cooling-power start time, in the case where marks with each mark length of between 3T and 11T are recorded, are shown every 3 kinds of recording waveforms.

In one example the recording pulse train A of Fig. 4 was employed.

The recording waveform 10-1 of Table 19 is the case where no cooling pulse is added, like the recording waveform H of Fig. 1. The recording waveform 10-2 is the case where irradiation at a cooling power is performed after irradiation of a recording pulse train, like the recording waveform I of Fig. 1. However, the cooling-power irradiation time varies depending on the length of a mark to be recorded, and the cooling-power irradiation time has become longer as a mark becomes shorter.

**[Table 19]**

| Recording waveform | Mark length | 3T | 4T | 5T | 6T | 7T | 8T | 9T | 10T | 11T |
|---|---|---|---|---|---|---|---|---|---|---|
| 10-1 | Cooling-power irradiation time | 0T | 0T | 0T | 0T | 0T | 0T | 0T | 0T | 0T |
| | Cooling-power start time | 0T | 0T | 0T | 0T | 0T | 0T | 0T | 0T | 0T |
| 10-2 | Cooling-power irradiation time | 0.50 T | 0.45 T | 0.40 T | 0.35 T | 0.30 T | 0.25 T | 0.20 T | 0.15 T | 0.10 T |
| | Cooling-power start time | 0T | 0T | 0T | 0T | 0T | 0T | 0T | 0T | 0T |
| 10-3 | Cooling-power irradiation time | 0.50 T | 0.50 T | 0.50 T | 0.50 T | 0.50 T | 0.50 T | 0.50 T | 0.50 T | 0.50 T |
| | Cooling-power start time | 0T | 0.05 T | 0.10 T | 0.15 T | 0.20 T | 0.25 T | 0.30 T | 0.35 T | 0.40 T |

**[Table 20]**

| Radius | Recording waveform 10-1 | Recording waveform 10-2 | Recording waveform 10-3 |
|---|---|---|---|
| 23 mm | 14.0% | 11.5% | 11.3% |
| 30 mm | 13.3% | 10.2% | 10.4% |
| 37 mm | 11.8% | 8.0% | 8.3% |
| 43 mm | 10.9% | 9.9% | 10.4% |
| 50 mm | 11.4% | 11.9% | 12.2% |
| 57 mm | 12.3% | 13.5% | 14.2% |

Also, the recording waveform 10-3 is the case where after irradiation of a recording pulse train, irradiation at a bias power is performed and then irradiation at a cooling power is performed, like the recording waveform J of Fig. 1. However, the cooling power irradiation time is 0.50T, and the cooling-power start time varies depending on the length of a mark to be recorded, and is quickened as the mark becomes shorter.

From Table 20, in the case of the recording waveform 10-1, the jitter has gotten worse at the inner circumference of the disk in comparison with other recording waveforms. On the other hand, in the case where the recording waveform 10-2 was employed, the jitter has been improved at the inner circumferential portion of the disk in comparison with the recording waveform 10-1, but the jitter has conversely gotten worse at the outer circumferential portion. Also, in the case where the recording waveform 10-3 was employed, the jitter has been improved at the inner circumferential portion of the disk in comparison with the recording waveform 10-1, but the jitter has conversely gotten worse at the outer circumferential portion. Therefore, for an region inside a predetermined radius, for example, for the inner circumferential portion of the disk up to 43 mm, the recording waveforms 10-2 and 10-3 can be employed, and for the outer circumferential portion than that, the recording waveform 10-1 can be used.

As in the present embodiment and examples for a better understanding of the invention, the recording waveform 10-2 or 10-3 is employed at the inner circumferential portion of the disk and also the recording waveform 10-1 is employed at the outer circumferential portion from the point of simplifying a recording circuit, whereby a satisfactory jitter is obtainable at any radius of the disk.

As described above, in the case where an optical disk is rotated at a constant angular velocity, in the inner circumferential portion of the disk the cooling-power irradiation time is extended as the length of a mark becomes shorter, or cooling-power start time is quickened, whereby the recording where jitters are small becomes possible at any radius of the disk.

In this embodiment and these examples, while there has been shown the case where the cooling power is a light reproducing power, similar results were also obtained for the case where the cooling power is between 0 and a power smaller than a bias power.

Also, in this embodiment and these examples, while there has been shown the case where the second power of a recording pulse train is a bias power, similar results were also obtained for the case where the second power is greater than 0 and less than a recording power.

Also, while the case of the recording pulse train A of Fig. 4 has been shown as a recording pulse train forming an example for a better understanding of the invention, similar results were also obtained for the cases of the recording pulse trains B, and D of Fig. 4 forming further examples. Recording pulse train C of Fig. 4 with waveform 10-2 forms an embodiment of the invention. Waveforms 10-1 and 10-3 form examples for a better understanding of the invention.

### (Example 6)

A description will be made of the case where mark's rear end correction pulse trains, which serve as various cooling pulses, have been added immediately after a recording pulse train.

In this example for a better understanding of the invention the recording pulse train A of Fig. 4 was employed. Then, various mark's rear end correction pulse trains were added immediately after the recording pulse train. Measurement conditions are the same as the embodiment 1.

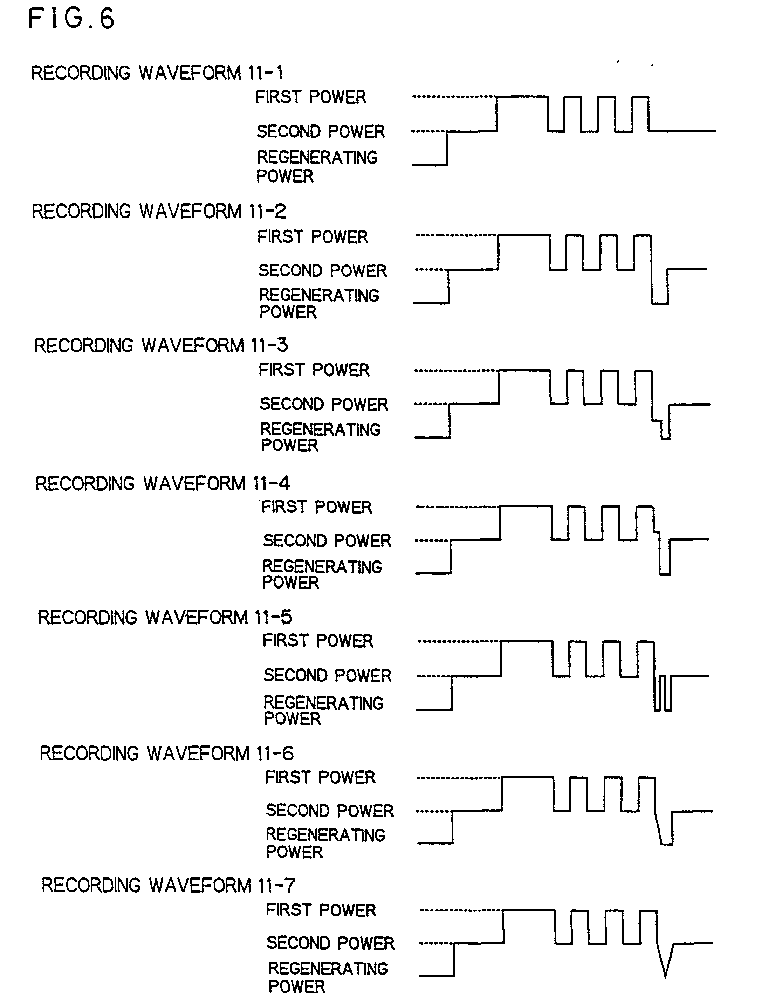

Various recording waveforms used in this example will be described with Fig. 6. In the figure there are shown typical recording waveform patterns used when a mark with a length of 6T is recorded.

Recording waveform 11-1 is the case where a mark's rear end correction pulse train is not added.

Recording waveform 11-2 is a recording waveform where immediately after a recording pulse train, laser light is irradiated for a period of 0.5T with a light reproducing power. After the irradiation, laser light irradiation is performed with a bias power.

Recording waveform 11-3 is a recording waveform where immediately after a recording pulse train, power is reduced down to an intermediate level between a bias power and a light reproducing power and then laser light is irradiated for a period of 0.25T. Immediately after the irradiation, the power is reduced down to the light reproducing power and then there is added a mark's rear end correction pulse train where laser light is irradiated for a period of 0.25T. Thereafter, laser light irradiation is performed with a bias power.

Recording waveform 11-4 is a recording waveform where immediately after a recording pulse train, laser light is irradiated for a period of 0.15T with a power higher than a bias power by 2 mW. Immediately after the irradiation, there is added a mark's rear end correction pulse train where laser light is irradiated for a period of 0.35T with a light reproducing power. Thereafter, laser light irradiation is performed with a bias power.

Recording waveform 11-5 is a recording waveform where immediately after a recording pulse train, laser light is irradiated for a period of 0.2T with a light reproducing power. Immediately after the irradiation, laser light is irradiated for a period of 0.1T with a bias power. Immediately after the irradiation, there is added a mark's rear end correction pulse train where laser light is irradiated for a period of 0.2T with a light reproducing power. Thereafter, laser light irradiation is performed with a bias power.

Recording waveform 11-6 is a recording waveform where immediately after a recording pulse train, power is continuously reduced from a bias power to a light reproducing power for a period of 0.2T and where there is added a mark's rear end correction pulse train where laser light is irradiated for a period of 0.3T with a light reproducing power. Thereafter, laser light irradiation is performed with a bias power.

Recording waveform 11-7 is a recording waveform where immediately after a recording pulse train, power is continuously reduced from a bias power to a light reproducing power for a period of 0.25T. After the reduction, there is added a mark's rear end correction pulse train where power is continuously increased from a light reproducing power to a bias power for a period of 0.25T. Thereafter, laser light irradiation is performed with a bias power. The respective recording waveforms are shown in Table 21 and also the jitter values after 100 overwrite operations are shown in Table 21.

**[Table 21]**

| Recording waveform | Jitter |
|---|---|
| Recording waveform 11-1 | 11.6% |
| Recording waveform 11-2 | 9.6% |
| Recording waveform 11-3 | 7.8% |
| Recording waveform 11-4 | 8.4% |
| Recording waveform 11-5 | 8.7% |
| Recording waveform 11-6 | 8.0% |
| Recording waveform 11-7 | 8.4% |

From Table 21, as in the recording waveform 11-2, in the case where the laser light irradiation, performed with a reproducing power (also referred to as a cooling power) lower than a bias power, is added as a mark's rear end correction pulse, the jitter value after 100 overwrite operations has been improved in comparison with the recording waveform 11-1.

On the other hand, as in the present example for a better understanding of the invention, in the recording waveforms 11-3, 11-4, 11-5, 11-6, and 11-7 where a mark's rear end correction pulse train is added, the symmetry between the front end portion and the rear end portion of the mark is controlled satisfactorily, so the jitter has further been improved in comparison with the recording waveform 14-2.

As described above, the recording, where jitters are satisfactory after 100 overwrite operations, becomes possible by adding a mark's rear end correction pulse train after a recording pulse train.

In this example, while there has been shown the case where the power of the mark's rear end correction pulse train is varied in two stages, it is a matter of course that similar results are also obtainable for the case where the aforementioned power is varied in three or more stages.

Also, in this example, while there has been shown the case where the cooling power is a light reproducing power, similar results were also obtained for the case where the cooling power was set between 0 and a power smaller than a bias power.

Also, in this example, while there has been shown the case where the second power of a recording pulse train is a bias power, similar results were also obtained for the case where the second power is greater than 0 and less than a recording power.

### (Embodiment 6 and examples for a better understanding of the invention)

Next, a description will be made of the case where laser light irradiation is performed between a recording pulse train and a mark's rear end correction pulse train by a bias power.

In one example the recording pulse train A of Fig. 4 was employed. Also, measurement conditions are the same as the example 6.

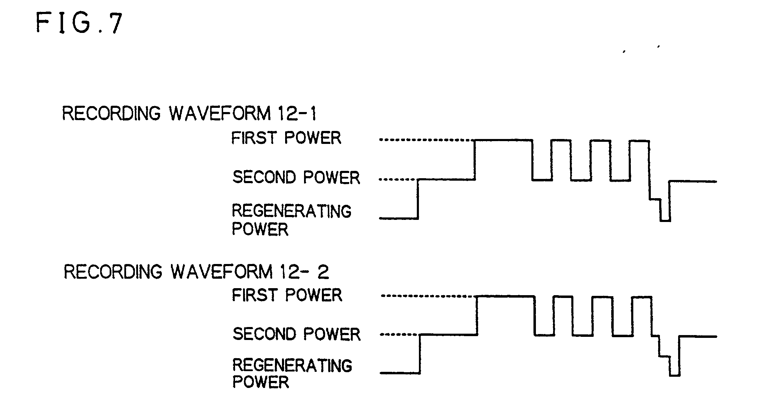

Various recording waveforms used in this embodiment and these examples will be described with Fig. 7. In the figure there are shown typical recording waveform patterns used when a mark with a length of 6T is recorded.

Recording waveform 12-1 is the same recording waveform as the recording waveform 11-3 of the example 6.

On the other hand, the recording waveform 12-2, where laser light irradiation is performed between a recording pulse train and a mark's rear end correction pulse train by a bias power, is a recording waveform where after a recording pulse train, laser light is irradiated for a period of 0.2T with a bias power. After the irradiation, the power is reduced to a power between a bias power and a reproducing power and then laser light is irradiated for a period of 0.25T. Immediately after the irradiation, the power is reduced to the reproducing power and then laser light is irradiated for a period of 0.25T. Thereafter, laser light irradiation is performed with the bias power.

The respective recording waveforms are shown in Table 22 and also the jitter values after 100 overwrite operations are shown in Table 22.

**[Table 22]**

| Recording waveform | Jitter |
|---|---|
| Recording waveform 12-1 | 7.8% |
| Recording waveform 12-2 | 7.2% |

From Table 22, in the recording waveform 12-2, where laser light irradiation is performed between a recording pulse train and a mark's rear end correction pulse train by a bias power, the symmetry between the front end portion and the rear end portion of the mark is satisfactory, so the jitter has further been improved in comparison with the recording waveform 12-1.

As described above, the recording, where jitters are satisfactory after 100 overwrite operations, becomes possible by performing laser light irradiation between a recording pulse train and a mark's rear end correction pulse train by a bias power.

In this embodiment and these examples, while there has been shown the case where the power of the mark's rear end correction pulse train is varied in two stages, it is a matter of course that similar results are also obtainable for the case where the aforementioned power is varied in three or more stages. Also, similar results are obtainable for the case of a mark's rear end correction pulse train having a period where after a recording pulse train, laser light is continuously varied to a power smaller than a bias power.

Also, while the case of the recording pulse train A of Fig. 4 has been shown as a recording pulse train forming an example for a better understanding of the invention, similar results were also obtained for the cases of the recording pulse trains B, and D of Fig. 4. forming further examples. Recording pulse train C of Fig. 4 with waveform 12-1 forms an embodiment of the invention. Waveform 12-2 forms an example for a better understanding of the invention.

Also, in this embodiment and these examples, while there has been shown the case where the cooling power is a light reproducing power, similar results were also obtained for the case where the cooling power was set between 0 and a power smaller than a bias power.

Also, in this embodiment and these examples, while there has been shown the case where the second power of a recording pulse train is a bias power, similar results were also obtained for the case where the second power is greater than 0 and less than a recording power.

### (Embodiment 7 and examples for a better understanding of the invention)

Next, a description will be made of the case where a mark's rear end correction pulse train is added to various recording pulse trains.

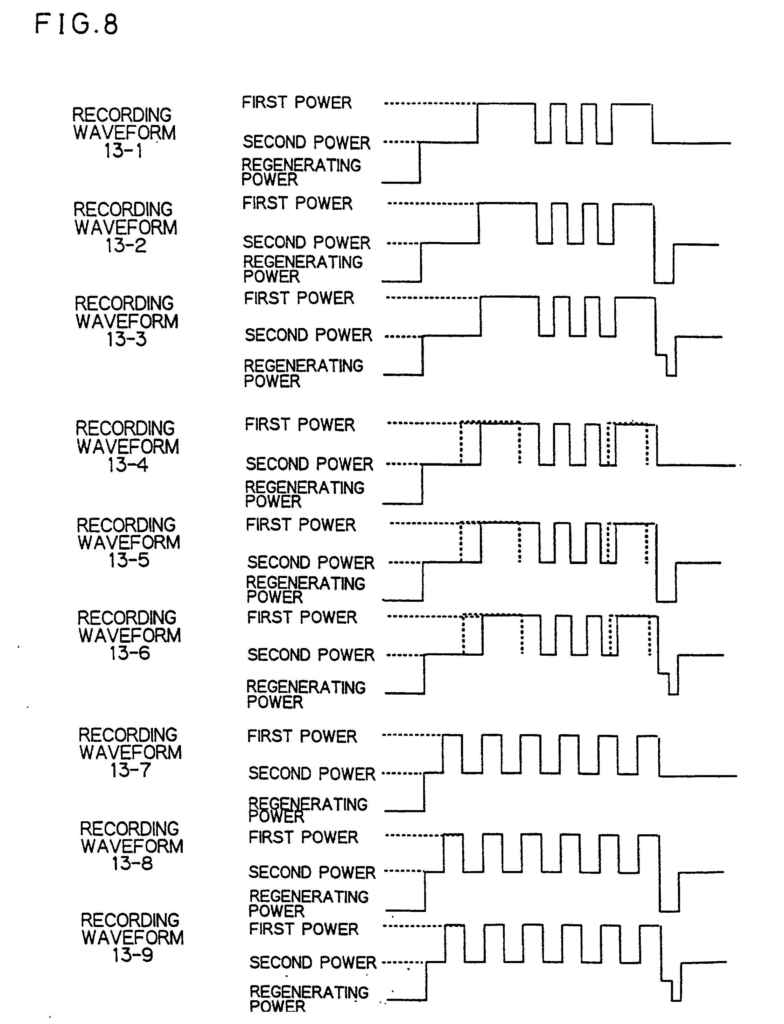

Various recording waveforms used in this embodiment and this examples will be described with Fig. 8. In the figure there are shown typical recording waveform patterns used when a mark with a length of 6T is recorded. Note that measurement conditions are the same as the example 6.

The recording pulse train of each of recording waveforms 13-1, 2, and 3 is the aforementioned recording pulse train B of Fig. 4. thus forming an example for a better understanding of the invention.

The recording waveform 13-1 is the case where a mark's rear end correction pulse train is not added.

The recording waveform 13-2 is a recording waveform where immediately after a recording pulse train, laser light is irradiated for a period of 0.5T with a light reproducing power. After the irradiation, laser light irradiation is performed with a bias power.

The recording waveform 13-3 is a recording waveform where immediately after a recording pulse train, power is reduced down to an intermediate level between a bias power and a light reproducing power and then laser light is irradiated for a period of 0.25T. Immediately after the irradiation, the power is reduced down to the light reproducing power and then there is added a mark's rear end correction pulse train where laser light is irradiated for a period of 0.25T. Thereafter, laser light irradiation is performed with a bias power.

Each of recording waveforms 13-4, 5, and 6 is the aforementioned recording pulse train C of Fig. 4 thus forming an embodiment of the invention.

The recording waveform 13-4 is the case where no mark's rear end correction pulse train is added.

The recording waveform 13-5 is the case where immediately after a recording pulse train, laser light is irradiated for a period of 0.5T with a light reproducing power. After the irradiation, laser light irradiation is performed with a bias power.

The recording waveform 13-6 is the case where immediately after a recording pulse train, the same mark's rear end correction pulse train as the recording waveform 13-3 is added. Thereafter, laser light irradiation is performed with a bias power.

Each of recording waveforms 13-7, 8, and 9 is the aforementioned recording pulse train D of Fig. 4 thus forming an example for a better understanding of the invention.

The recording waveform 13-7 is the case where no mark's rear end correction pulse train is added.

The recording waveform 13-8 is the case where immediately after a recording pulse train, laser light is irradiated for a period of 0.5T with a light reproducing power. After the irradiation, laser light irradiation is performed with a bias power.

The recording waveform 13-9 is the case where immediately after a recording pulse train, the same mark's rear end correction pulse train as the recording waveform 13-3 is added. Thereafter, laser light irradiation is performed with a bias power.

The respective recording waveforms are shown in Table 23 and also the jitter values after 100 overwrite operations are shown in Table 23.

**[Table 23]**

| Recording waveform | Jitter |
|---|---|
| Recording waveform 13-1 | 11.0% |
| Recording waveform 13-2 | 9.4% |
| Recording waveform 13-3 | 7.8% |
| Recording waveform 13-4 | 10.0% |
| Recording waveform 13-5 | 8.1% |
| Recording waveform 13-6 | 7.0% |
| Recording waveform 13-7 | 12.1% |
| Recording waveform 13-8 | 10.5% |
| Recording waveform 13-9 | 8.9% |

From Table 23, as in the recording waveform 13-2, in the case where, immediately after a recording pulse train, laser light irradiation is performed with a light reproducing power, the jitter value after 100 overwrite operations has been improved in comparison with the recording waveform 13-1.

On the other hand, in the recording waveforms 13-3 where a mark's rear end correction pulse train is added, the jitter is smaller in comparison with the recording waveform 13-2. Thus, for the recording pulse train B of Fig. 4, in the case where a mark's rear end correction pulse train is added, the symmetry between the front end portion and the rear end portion of the mark is better, so the jitter has been improved.

Likewise, for the recording pulse trains C and D of Fig. 4, in the case where a mark's rear end correction pulse train is added, the symmetry between the front end portion and the rear end portion of the mark is better, so the jitter has been improved.

As described above, the recording, where jitters are satisfactory after 100 overwrite operations, becomes possible by adding a mark's rear end correction pulse train to the recording pulse trains B, C, and D.

In this embodiment and these examples, while there has been shown the case where the power of the mark's rear end correction pulse train is varied in two stages, it is a matter of course that similar results are also obtainable for the case where the aforementioned power is varied in three or more stages. Also, similar results are obtainable for the case of a mark's rear end correction pulse train having a period where after a recording pulse train, laser light is continuously varied to a power smaller than a bias power.

Also, in this embodiment and these examples, while there has been shown the case where the cooling power is a light reproducing power, similar results were also obtained for the case where the cooling power was set between 0 and a power smaller than a bias power.

Also, in this embodiment and these examples, while there has been shown the case where the second power of a recording pulse train is a bias power, similar results were also obtained for the case where the second power is greater than 0 and less than a recording power.

### (Embodiment 8 and examples for a better understanding of the invention)

Next, a description will be made of the case where the mark's rear end correction pulse train start time is varied according to the length of a mark to be recorded.

In this embodiment and these examples the measurement conditions are the same as the example 6. Also, in one example the recording pulse train A of Fig. 4 was employed.

Various recording waveforms used in this embodiment will be described with Table 24.

**[Table 24]**

| Mark length | Start time of a mark' rear end correction pulse train after a recording pulse train | |
|---|---|---|
| | Recording waveform 14-1 | Recording waveform 14-2 |
| 3T | 0T | 0T |
| 4T | 0T | 0.1T |
| 5T | 0T | 0.2T |
| 6T | 0T | 0.3T |
| 7T | 0T | 0.4T |
| 8T | 0T | 0.5T |
| 9T | 0T | 0.6T |
| 10T | 0T | 0.7T |
| 11T | 0T | 0.8T |

Recording waveform 14-1 is a recording waveform where, immediately after a recording pulse train, power is reduced down to an intermediate level between a bias power and a light reproducing power regardless of the length of a mark to be recorded and then laser light is irradiated for a period of 0.25T. Immediately after the irradiation, the power is reduced down to the light reproducing power and then laser light is irradiated for a period of 0.25T. Thereafter, laser light irradiation is performed with a bias power.

Recording waveform 14-2 has the same mark's rear end correction pulse train as the recording waveform 14-1. The start time of the mark's rear end correction pulse train is 0.8 when a mark with a length of 11T is recorded. As the mark length becomes shorter, the start time is quickened 0.1T at a time. When a mark with a length of 3T is recorded, a mark's rear end correction pulse train is added immediately after a recording pulse train. Thereafter, laser light irradiation is performed with a bias power.

The respective recording waveforms are shown in Table 25 and also the jitter values after 100 overwrite operations are shown in Table 25.

**[Table 25]**

| Recording waveform | Jitter |
|---|---|
| Recording waveform 14-1 | 7.8% |
| Recording waveform 14-2 | 6.7% |

From Table 25, in the recording waveform 14-2, where the mark's rear end correction pulse train start time is varied according to the length of a mark, the symmetry between the front end portion and the rear end portion of the mark has gotten better, so the jitter has further been improved in comparison with the recording waveform 14-1.

As described above, the recording, where jitters are satisfactory after 100 overwrite operations, becomes possible by varying the mark's rear end pulse train start time in accordance with the length of a mark to be recorded.

In this embodiment and these examples, while there has been shown the case where the power of the mark's rear end correction pulse train is varied in two stages, it is a matter of course that similar results are also obtainable for the case where the aforementioned power is varied in three or more stages. Also, similar results are obtainable for the case of a mark's rear end correction pulse train having a period where after a recording pulse train, laser light is continuously varied to a power smaller than a bias power.

Also, in this embodiment and these examples, while there has been shown the case where the cooling power is a light reproducing power, similar results were also obtained for the case where the cooling power is between 0 and a power smaller than a bias power.

Also, in this embodiment and these examples, while there has been shown the case where the second power of a recording pulse train is a bias power, similar results were also obtained for the case where the second power is greater than 0 and less than a recording power.

Also, while the case of the recording pulse train A of Fig. 4 has been shown as a recording pulse train forming an example for a better understanding of the invention, similar results were also obtained for the cases of the recording pulse trains B, and D of Fig. 4 forming further examples. Recording pulse train C of Fig. 4 with waveform 14-1 forms an embodiment of the invention. Waveform 14-2 forms an example for a better understanding of the invention.

### (Embodiment 9 and examples for a better understanding of the invention)

Next, a description will be made of the case where the pulse configuration of a mark's rear end correction pulse train is varied according to the length of a mark to be recorded.

In one example a recording pulse train (the recording pulse train A of Fig. 4) was employed. Also, measurement conditions are the same as the example 6.

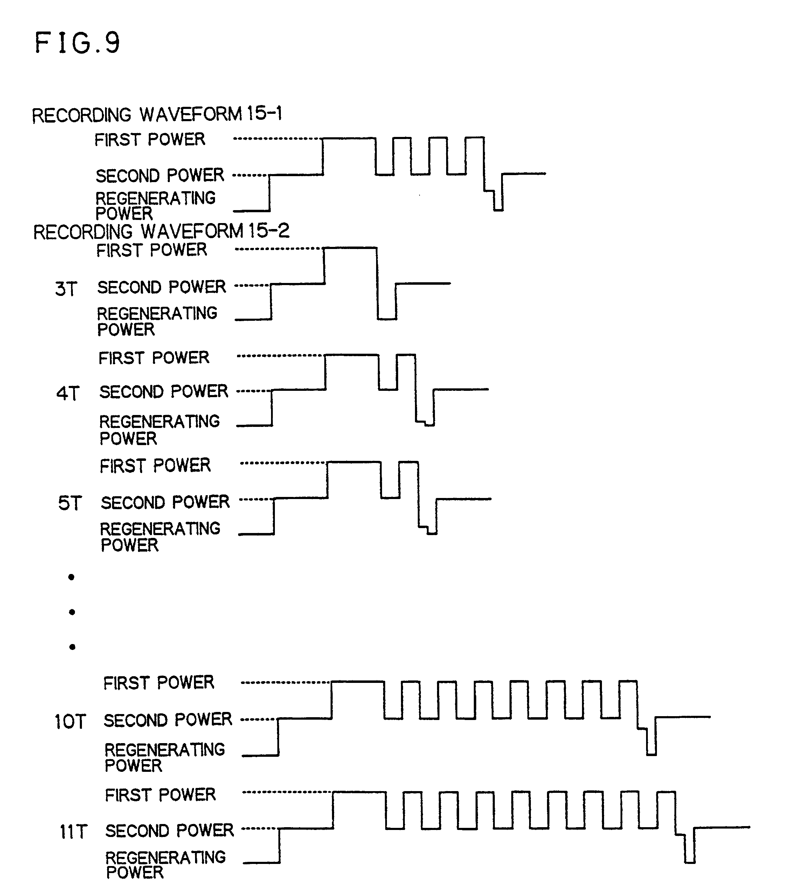

Various recording waveforms used in this embodiment and these examples will be described with Fig. 9. Note that in the recording waveform 15-1 of Fig. 9 there is shown a typical recording pattern used when a mark with a length of 6T is recorded. Also, in the recording waveform 15-2 there are shown recording patterns used when, among marks with lengths of 3T through 11T, the marks with lengths of 3T through 5T, 10T and 11T are recorded.

The recording waveform 15-1 is the same as the recording waveform 11-3 of the example 6.

The recording waveform 15-2 is a recording waveform where, immediately after a recording pulse train, the power is varied so as to be smaller as the length of a mark becomes shorter. Specifically, when the 3T mark is recorded, the power is set to a light reproducing power, and when the 4T mark is recorded, the power is set to a power greater than the light reproducing power by 1/8 of the power between a bias power and the light reproducing power. Thus, as the mark length becomes longer, the power is increased. Laser light is irradiated with the power for a period of 0.25T. Immediately after the irradiation, the power is reduced down to the light reproducing power and then there is added a mark's rear end correction pulse where laser light is irradiated for a period of 0.25T. Thereafter, laser light irradiation is performed with a bias power.

The respective recording waveforms are shown in Table 26 and also the jitter values after 100 overwrite operations are shown in Table 26.

**[Table 26]**

| Recording waveform | Jitter |
|---|---|
| Recording waveform 15-1 | 7.8% |
| Recording waveform 15-2 | 6.4% |

From Table 26, as in the recording waveform 15-2 of the present invention, in the recording waveform where the configuration of the mark's rear end correction pulse train start time is varied according to the length of a mark to be recorded, the jitter value after 100 cycles has been improved in comparison with the recording waveform 15-1.

As described above, by varying the pulse configuration of the mark's rear end pulse train start time in accordance with the length of a mark to be recorded, the symmetry between the front and rear ends of the disk becomes better and therefore the recording where the quality of a reproduced signal is satisfactory becomes possible.

In this embodiment and these examples, while there has been shown the case where the power of the mark's rear end correction pulse train is varied in two stages, it is a matter of course that similar results are also obtainable for the case where the aforementioned power is varied in three or more stages. Also, similar results are obtainable for the case of a mark's rear end correction pulse train having a period where after a recording pulse train, laser light is continuously varied to a power smaller than a bias power.

Also, in this embodiment and these examples, while there has been shown the case where the cooling power is a light reproducing power, similar results were also obtained for the case where the cooling power is between 0 and a power smaller than a bias power.

Also, in this embodiment and these examples, while there has been shown the case where the second power of a recording pulse train is a bias power, similar results were also obtained for the case where the second power is greater than 0 and less than a recording power.

Also, while the case of the recording pulse train A of Fig. 4 has been shown as a recording pulse train forming an example for a better understanding of the invention, similar results were also obtained for the cases of the recording pulse trains B, and D of Fig. 4 forming further examples. Recording pulse train C of Fig. 4 with waveforms 15-1 and 15-2 form embodiments of the invention.

### (Embodiment 10 and examples for a better understanding of the invention)

Next, a description will be made of the case where an optical disk is rotated at a constant angular velocity and where the start time of a mark's rear end correction pulse train is varied according to the radial position of a disk.

Also, the number of revolutions of the disk is 1000 rpm, and for an EFM signal, clock T was varied so that the shortest mark length becomes µm at all times.

In one example the same recording pulse train as the example 6 (the recording pulse train A of Fig. 4) was employed.

Various recording waveforms used in this embodiment and these examples will be described with Table 27.

**[Table 27]**

| Recording waveform | Start time of a mark's rear end correction pulse train after a recording pulse train | |
|---|---|---|
| 16-1 | | --- |
| 16-2 | | 0T |
| 16-3 | Inner circumference | 0T |
| | Middle circumference | 0.2T |
| | Outer circumference | 0.5T |

Recording waveform 16-1 is the case where no mark's rear end correction pulse train is added.

Recording waveform 16-2 is the same as the recording waveform 11-3 of the example 6.

Recording waveform 16-3 also has the same mark's rear end correction pulse train as the recording waveform 11-3 of the example 6, but the start time of the mark's rear end correction pulse train is made shorter as the radial position of the disk gets closer to the inner circumferential side. Specifically, when the radius of the disk is between 23 and 34 mm, a mark's rear end correction pulse train is added immediately after a recording pulse train. When it is between 35 and 46 mm, the start time of the mark's rear end correction pulse train is delayed by 0.2T, and When it is between 47 and 57 mm, the start time of the mark's rear end correction pulse train is delayed by 0.5T.

The respective recording waveforms are shown in Table 28 and also the jitter values after 100 overwrite operations are shown in Table 28. Note that measurements were made at each radius when the inner circumference is 26 mm, the middle circumference is 38 mm, and the outer circumference is 50 mm. Also, the respective linear velocities at the radii are about 2.7, 4.0, and 5.2 m/s.

Also, the other measurement conditions are the same as the example 6.

**[Table 28]**

| Recording waveform | Jitter | | |
|---|---|---|---|
| | Inner circumference | Middle circumference | Outer circumference |
| 16-1 | 13.5% | 11.6% | 11.4% |
| 16-2 | 9.0% | 7.8% | 9.3% |
| 16-1 | 9.0% | 6.7% | 8.0% |

From Table 28, in the recording waveform 16-1, the jitter becomes worse because heat stays indoors, but if a mark's rear end correction pulse train is added like the recording waveform 16-2, no heat stays indoors and therefore the jitter value after 100 overwrite operations has been improved over the entire circumference of the disk.

On the other hand, in the recording waveform 16-3 where the start time of the mark's rear end correction pulse train start time is varied according to the radial position of the mark, thermal control has been finely performed at the middle and outer circumferential portions, so the jitter has further been improved.

As described above, the recording, where jitters are satisfactory after 100 overwrite operations, becomes possible by varying the start time of the mark's rear end pulse train in accordance with the radial position of the disk.

In this embodiment and these examples, while there has been shown the case where the power of the mark's rear end correction pulse train is varied in two stages, it is a matter of course that similar results are also obtainable for the case where the aforementioned power is varied in three or more stages. Also, similar results are obtainable for the case of a mark's rear end correction pulse train having a period where after a recording pulse train, laser light is continuously varied to a power smaller than a bias power.

Also, in this embodiment and these examples, while there has been shown the case where the cooling power is a light reproducing power, similar results were also obtained for the case where the cooling power is between 0 and a power smaller than a bias power.

Also, in this embodiment and these examples, while there has been shown the case where the second power of a recording pulse train is a bias power, similar results were also obtained for the case where the second power is greater than 0 and less than a recording power.

Also, while the case of the recording pulse train A of Fig. 4 has been shown as a recording pulse train forming an example for a better understanding of the invention, similar results were also obtained for the cases of the recording pulse trains B, and D of Fig. 4 forming further examples. Recording pulse train C of Fig. 4 with waveform 16-2 forms an embodiment of the invention. Waveforms 16-1 and 16-3 form examples for a better understanding of the invention.

### (Embodiment 11 and examples for a better understanding of the invention)

Next, a description will be made of the case where an optical disk is rotated at a constant angular velocity and where the pulse configuration of a mark's rear end correction pulse train is varied according to the radial position of a disk.

In one example the same recording pulse train as the example 6 (the recording pulse train A of Fig. 4) was employed.

Also, measurement conditions is the same as the embodiment 10.

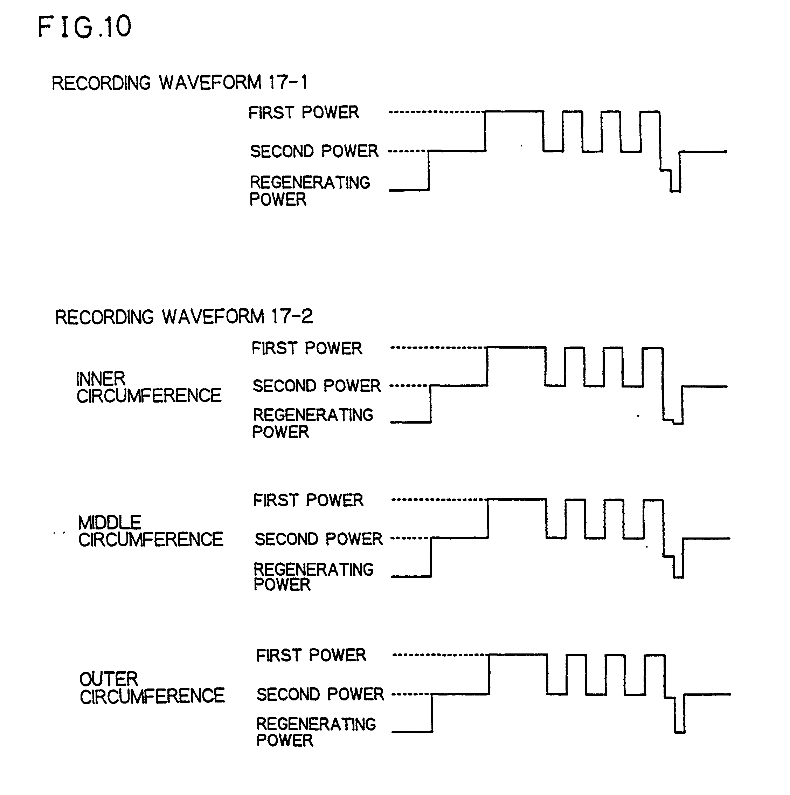

Various recording waveforms used in this embodiment and these examples will be described with Fig. 10. In the figure there are shown typical recording patterns used when a mark with a length of 6T is recorded. Also, in the recording waveform 17-2 there are shown recording waveforms used at the inner, middle, and outer circumferences of the disk.

The recording waveform 17-1 is constant in the configuration of a mark's rear end correction pulse train regardless of the radial position of the disk, and the recording waveform is the same as the recording waveform 11-3 of the example 6.

The recording waveform 17-2 is a recording waveform where, immediately after a recoding pulse train, the power of the mark's rear end correction pulse train is varied so as to become smaller as the radial position of the disk gets closer to the inner circumferential side. Specifically, when the radius is between 23 and 34 mm, the power after the recording pulse train is set to a power higher than a light reproducing power by 1 mW, when the radius is between 35 and 46 mm, the power is set to between a bias power and a light reproducing power, and when the radius is between 47 and 57 mm, the power is set to a power lower than a bias power by 1 mW. With the power, laser light is irradiated for a period of 0.25T. Immediately after the irradiation, the power is reduced down to the light reproducing power and then there is added a mark's rear end correction pulse where laser light is irradiated for a period of 0.25T. Thereafter, laser light irradiation is performed with a bias power.

The respective recording waveforms are shown in Table 29 and also the jitter values after 100 overwrite operations are shown in Table 29.

**[Table 29]**

| Recording waveform | Jitter | | |
|---|---|---|---|
| | Inner circumference | Middle circumference | Outer circumference |
| 17-1 | 9.0% | 7.8% | 9.3% |
| 17-2 | 8.1% | 7.8% | 7.9% |

From Table 29, the symmetry between the front end portion and the rear end portion of the mark is better at the inner and outer circumferential portions for the recording waveform 17-2 of the present invention where, immediately after a recoding pulse train, the power of the mark's rear end correction pulse train is varied so as to become smaller as the radial position of the disk gets closer to the inner circumferential side. Therefore, the jitter has been improved in comparison with the recording waveform 17-1.

As described above, the recording, where jitters are satisfactory after 100 overwrite operations, becomes possible by varying the pulse configuration of the mark's rear end pulse train in accordance with the radial position of the disk.

In this embodiment and these examples, while there has been shown the case where the power of the mark's rear end correction pulse train is varied in two stages, it is a matter of course that similar results are also obtainable for the case where the aforementioned power is varied in three or more stages. Also, similar results are obtainable for the case of a mark's rear end correction pulse train having a period where after a recording pulse train, laser light is continuously varied to a power smaller than a bias power.

Also, in this embodiment and these examples, while there has been shown the case where the cooling power is a light reproducing power, similar results were also obtained for the case where the cooling power is between 0 and a power smaller than a bias power.

Also, in this embodiment and these examples, while there has been shown the case where the second power of a recording pulse train is a bias power, similar results were also obtained for the case where the second power is greater than 0 and less than a recording power.

Also, while the case of the recording pulse train A of Fig. 4 has been shown as a recording pulse train forming an example for a better understanding of the invention, similar results were also obtained for the cases of the recording pulse trains B, and D of Fig. 4 forming further examples. Recording pulse train C of Fig. 4 with waveform 17-1 and 17-2 form embodiments of the invention.

### (Embodiment 12 and examples for a better understanding of the invention)

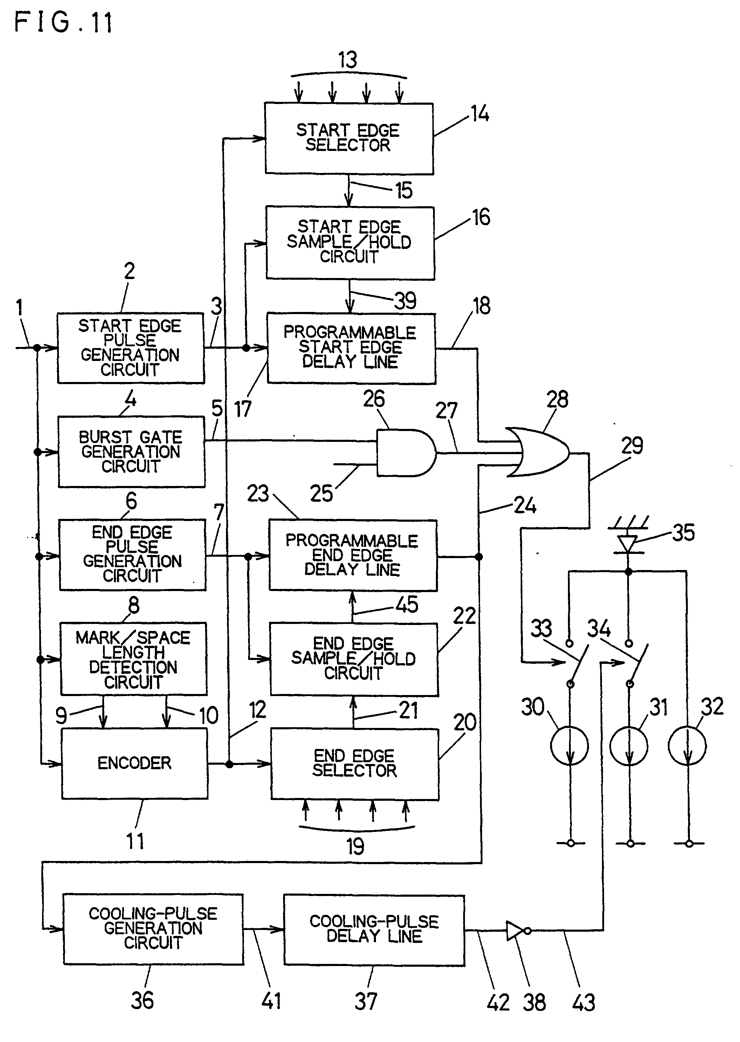

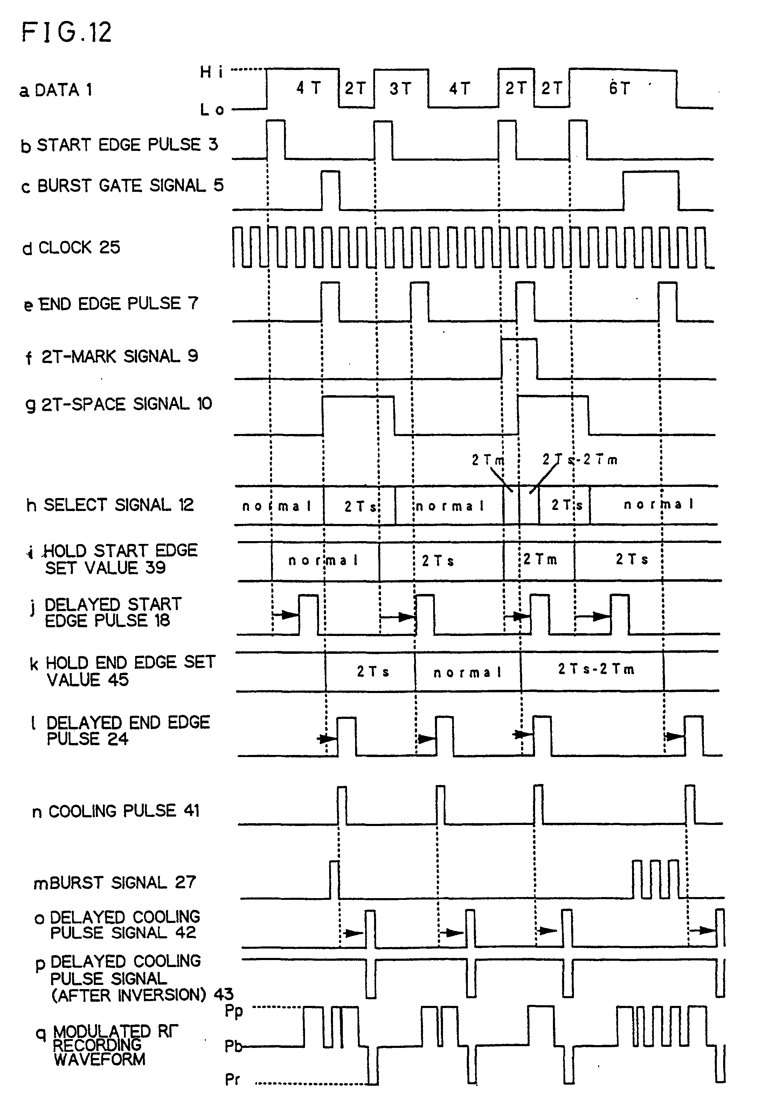

Among the cases of the present invention and the examples, the operation in the case where the time between the end edge pulse of a recording pulse train and the start of laser light irradiation which is performed with a cooling power is constant will first be described with a block diagram of a disk recording unit of Fig. 11 and the signal waveform diagram of each part of Fig. 12.

In this embodiment, data 1 is PWM data (Fig. 12a) having a high period and a low period which are two or more cycles of a clock in the length of clock unit. The high period of the data is recorded on a disk in correspondence with a mark, and the low period is recorded in correspondence with space.

Also, each width of a start edge pulse 3 and an end edge pulse 7 is assumed to be one cycle of the clock, and the width of a single burst pulse 27 is assumed to be a half cycle of the clock.

The width of a cooling pulse is taken to be a half cycle of the clock, and the time between the end edge pulse of a recording pulse train and the start of laser light irradiation which is performed with a cooling power is also taken to be a half cycle of the clock.

Furthermore, a mark/space length detection circuit 8 detects the space length at which the thermal interference between marks arises with high-density recording and also detects the mark/space length at which peak shift arises due to the frequency characteristic of a reproduction system.

In this embodiment it is assumed that the shortest 2T mark and 2T space, which exist in a data string to be recorded, are detected.

First, in a start edge pulse generation circuit 2, the start edge pulse 3 with a width of one cycle of the clock is generated at the start edge portion of the high period of the data 1 (Fig. 12b).

In a burst gate generation circuit 4, a burst gate signal 5 with a length of the mark length reduced by three clocks is generated at the intermediate position of the mark. Note that when the mark length is 3 clocks or less, no burst gate signal is generated (Fig. 12c).

In an end edge pulse generation circuit 6, the end edge pulse 7 with a width of one cycle of the clock is generated at the end edge portion of the high period of the data 1 (Fig. 12e).

In a mark/space length detection circuit 8 detects data having a two-clock width, that is, a 2T mark and a 2T space. When a 2T mark appears, a 2T-mark signal 9 with a two-clock width is generated so as to include the start edge pulse and the end edge pulse of the 2T mark (Fig. 12f). When a 2T space appears, a 2T-space signal 10 with a four-clock width is generated so as to include the end edge pulse and the start edge pulse of both edges of the 2T space (Fig. 12g).

In an encoder 11, the attributes of the start edge pulse 3 and the end edge pulse 7 are determined by the 2T-mark signal 9 and the 2T-space signal 10, and a select signal 12 is output. That is, data with both a 3T mark or more and a 3T space or more is referred to as "normal." Data with both a 3T mark or more and a 2T space is referred to as 2Ts. Data with both a 2T mark and a 3T space or more is referred to as 2Tm. Data with both a 2T mark and a 2T space is referred to as 2Ts - 2Tm. Thus, the data is classified into 4 kinds of attributes (Fig. 12h).

Next, in a start edge selector 14, a single start edge set value is selected by the selector signal 12 from a plurality of start edge set values 13, that is, a start edge set value during "normal," a start edge set value during 2Ts, a start edge set value during 2Tm, and a start edge set value during 2Ts - 2Tm, and then a selected start edge set value 15 is output.

In a start edge sample/hold circuit 16, only when the start edge pulse 3 appears, updating is performed, and when the start edge pulse 3 does not appear, a previous value is held and a held start edge set value 39 is output (Fig. 12i).

Then, in a programmable start edge delay line 17, the start edge pulse 3 is output as a start edge delay pulse 18 after the delayed time of a value based on the held start edge set value 39 (Fig. 12j).

Similarly, in an end edge selector 20, a single end edge set value is selected from a plurality of end edge set values 19 by the select signal 12, and a selected end edge set value 21 is output. In an end edge sample/hold circuit 22, only when the end edge pulse 7 appears, updating is performed, and when the end edge pulse 7 does not appear, a previous value is held and a held end edge set value 45 is output (Fig. 12k).

Then, in a programmable end edge delay line 23, the end edge pulse 7 is output as a delayed end edge pulse 24 after the delayed time of a value based on the held end edge set value 45 (Fig. 121).

Now, a description will be made of the output of a delayed cooling pulse signal.

In a cooling pulse generation circuit 36, a cooling pulse is generated at the rise timing of the delayed end edge pulse by the amount of the half cycle of the clock (Fig. 12n).

In a cooling pulse delay line 37, a cooling pulse 41 which is output from the cooling pulse generation circuit 36 is delayed by a constant quantity, and a cooling pulse signal 42 is output (Fig. 120).

The cooling pulse 42 is passed through an inverter 38 and is output as a delayed cooling pulse signal 43 where a high and a low were inverted (Fig. 12p).

Furthermore, in an AND gate 26, a logical product is taken between the aforementioned burst gate signal 5 and the clock 25, and a burst pulse 27 is generated (Fig. 12m).

In an OR gate 28, a logical sum is taken between the delayed start edge pulse 18 and the burst pulse 27, and a recording signal 29 is generated.

A laser diode 35 is biased by a generating light current source 32 so that the diode 35 emits a reproducing light power for a phase change type optical disk.

A bias level current source 31 and a recording level current source 30 are provided in parallel with the reproducing light current source 32, and if the current of the recording level current source 30 is turned on or off by a switch 33 and if the bias level current source 31 is turned on or off by a switch 34, the drive current of the laser diode 35 can be switched between three currents: a recording level current, a bias level current, and a reproducing light level current.

That is, by controlling the aforementioned recording signal 29 with this switch 33 and the delayed cooling pulse signal 43 with the switch 34, laser light can be emitted while switching the laser diode 35 with the recording power, the bias power, and the cooling power. With an optical head having the laser diode 35 incorporated therein, marks and spaces are formed on a phase change type optical disk by a recording method where a cooling pulse is added (Fig. 12q).

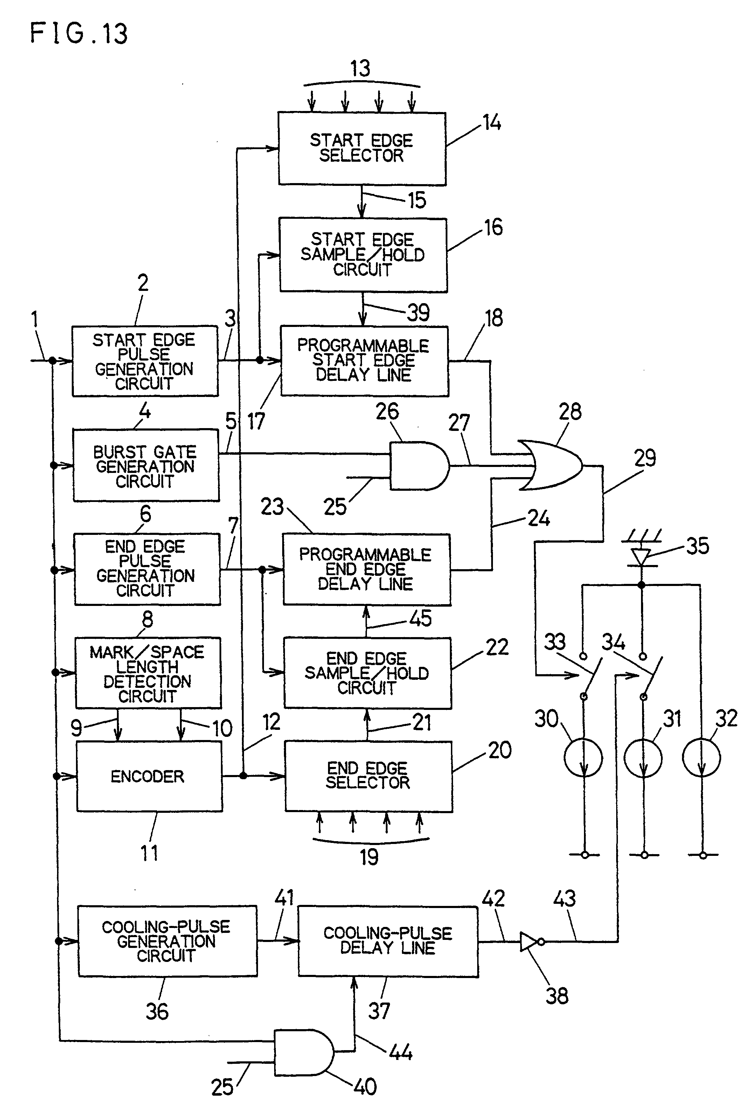

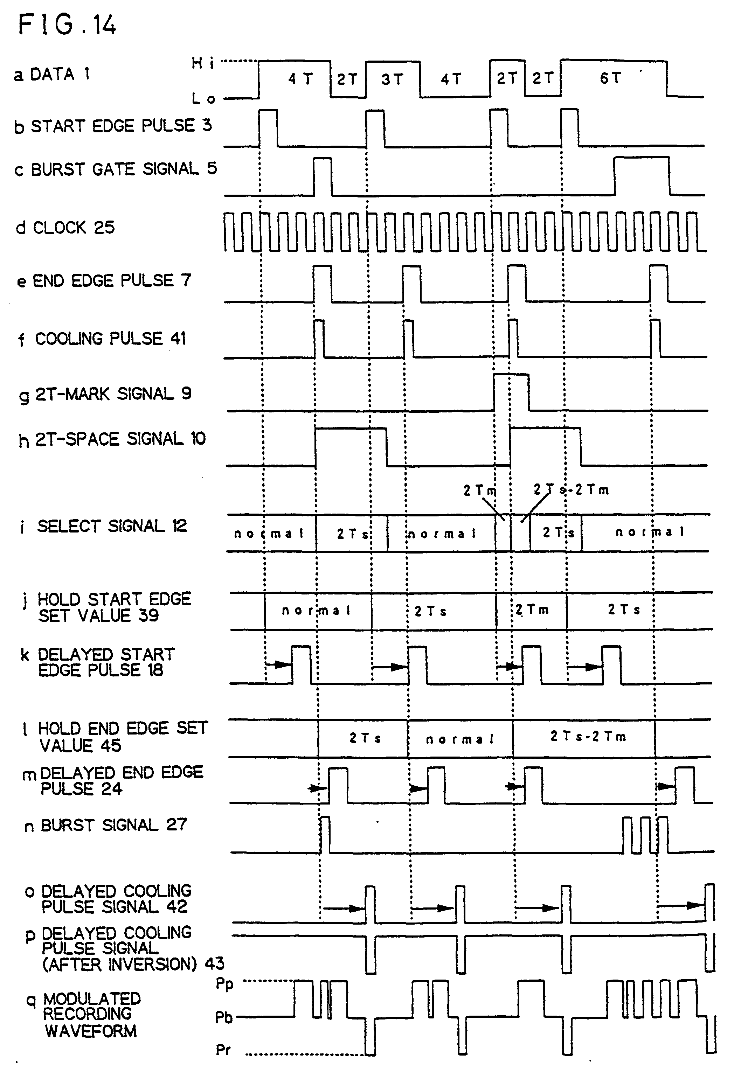

Next, the fabrication method of the delayed cooling pulse signal in the case where the timing of the start of the light irradiation at a cooling power is based on a clock will be described with the block diagram of the disk unit of Fig. 13 and the signal waveform diagram of each part of Fig. 14.

In this case, a cooling pulse 48 is output from the cooling pulse generation circuit 46 at the same timing as the rise of the end edge pulse that was output from the end edge pulse generation circuit 6 (14f).

The cooling pulse delay line 37 outputs a cooling pulse delayed by a constant quantity of delay (Fig. 14o).

The other operational principles are the same as the aforementioned.

With a sequence of operations described above, the disk storage unit in this embodiment adds laser light irradiation at a cooling power and respectively changes the positions of the start and end edges of a mark in accordance with the length of the mark to be recorded and the front and rear space lengths of the mark, whereby the mark and the space can be recorded in correspondence with data.

In this embodiment, while (1-7) RLL code signal recording has been assumed and in the mark/space length detection circuit there has been shown 4 patterns consisting of a 2T mark and a 2T space which are the shortest inverted spacings and a mark and a space which are greater than 2T, data can be further classified into a mark and a space which are greater than 3T, whereby the positional precision of the edges of each mark can be enhanced.

Also, while the start edge pulse and the end edge pulse has been taken to be a IT width and the burst pulse a 0.5T width, it is also possible to select an optimum pulse width in accordance with the relative velocity between a recording film (or a storage medium) and an optical spot.

Also, although the cooling pulse width has been assumed to be 0.5T which is a constant value, total energy can also be further reduced by varying the pulse with in accordance with mark length and mark spacing.

For the evaluation conditions of an optical disk, the wavelength of the laser light is 680 nm and the NA of the objective lens of the optical head used for the recording and reproduction of the recording unit is 0.55. For a (1-7) RLL signal, clock T is set so that the shortest mark length becomes 0.60 µm. The jitter value σsum/Tw (%) of the zero-cross point of a reproduced signal between 2T and 8T, when recorded, was measured. Here, σsum is the standard deviation of the sum of jitters between 2T and 8T, and Tw is the window width of the detecting system. The linear velocity is 4.0 m/s.

On this disk, for signal recording, the recording power, where the C/N ratio saturates when a single frequency where the length of a mark becomes 0.6 µm is recorded, is taken to be a recording power. The power of the center value of the power margin, where the erasion rate exceeds -20 dB when the 2T mark is overwritten with a single frequency corresponding to 7T, is set and taken to be a bias power.

The cycle characteristic of the disk was judged by the number of cycles where the jitter value σsum/Tw (%) of the zero-cross point of a reproduced signal between 2T and 8T is less than 13%.

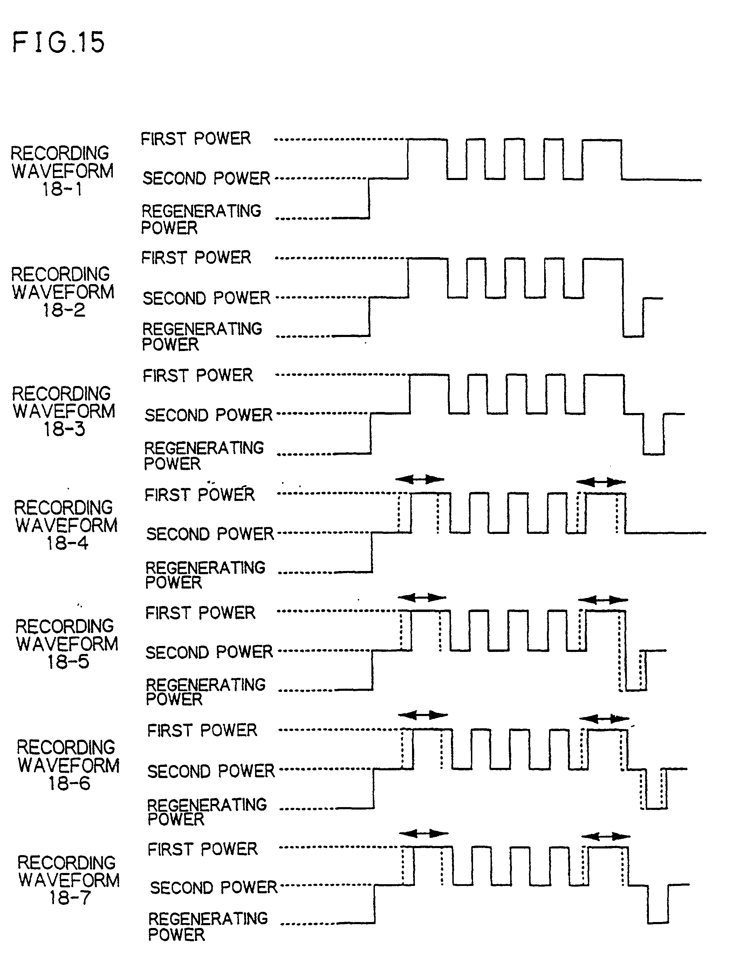

With Fig. 15, the recording waveforms used in this embodiment and these examples will be described. In the figure there are shown typical recording waveform patterns used when a 7T mark is recorded. For recording waveforms 18-1 through 18-3, the recording pulse train B of Fig. 4 is employed thus forming examples for a better understanding of the invention, and for recording waveforms 18-4 through 18-7, the recording pulse train C of Fig. 4 is employed. Waveforms 18-4, 18-6 and 18-7 form examples for a better understanding of the invention. Waveform 18-5 forms an embodiment of the invention.

The recording waveform 18-1 is a recording pulse train where the width of the start edge pulse is 1.0T and the width of the end edge pulse is 1.0T and where between the start edge and end edge pulses, laser light is irradiated alternately for a period 0.5T with the second power and for a period 0.5T with the first power. In this case no cooling pulse is added.

The recording waveform 18-2 is the case where immediately after the end edge pulse of the recording pulse train, a cooling pulse having an irradiation time of 0.5T at a cooling power is added to the aforementioned recording waveform 18-1 regardless of the length of a mark to be recorded.

The recording waveform 18-3 is the case where a cooling pulse is added to the aforementioned recording pulse 18-1. The cooling pulse is a pulse where the irradiation time at a cooling power is 0.5T regardless of the length of a mark to be recorded and where the time between the fall of the end edge pulse of the recording pulse train and the start of the laser light irradiation which is performed with a cooling power is constant like 0.5T.

The recording waveform 18-4 is the case where the positions of the start edge pulse and the end edge pulse of the recording pulse train are changed according to the length of the mark recorded with the recording waveform 18-1 and the front and rear spacings of the mark and where no cooling pulse is added.

The recording waveform 18-5 is the case where immediately after the end edge pulse of the recording pulse train, a cooling pulse having an irradiation time of 0.5T at a cooling power is added to the aforementioned recording waveform 18-4 regardless of the length of a mark to be recorded.

The recording waveform 18-6 is the case where a cooling pulse is added to the aforementioned recording pulse 18-4. The cooling pulse is a pulse where the irradiation time at a cooling power is 0.5T regardless of the length of a mark to be recorded and where the time between the fall of the end edge pulse of the recording pulse train and the start of the laser light irradiation which is performed with a cooling power is constant like 1.5T.

The recording waveform 18-7 is the case where a cooling pulse is added to the aforementioned recording pulse 18-4. The cooling pulse is a pulse where the irradiation time at a cooling power is 0.5T regardless of the length of a mark to be recorded and where the irradiation start at a cooling power is delayed than the rise of the end edge pulse of a sub-pulse (a pulse between the start edge pulse and the end edge pulse) by a constant quantity such as 2.5T. That is, in this case the start time of the cooling pulse irradiation is based on a clock.

The respective recording waveforms, the jitter values after 100 overwrite operations, and the number of cycles where a jitter value is less than 13% are shown in Table 30.

**[Table 30]**

| Recording waveform | Jitter after 100 cycles | Number of cycles satisfying jitter < 13% |
|---|---|---|
| 18-1 | 10.3% | 300,000 |
| 18-2 | 9.0% | 800,000 |
| 18-3 | 7.5% | 800,000 |
| 18-4 | 7.3% | 500,000 |
| 18-5 | 6.9% | 1,000,000 |
| 18-6 | 6.3% | 1,100,000 |
| 18-7 | 6.4% | 1,100,000 |

From Table 30, as in the present invention, in the recording waveform 18-2 where the cooling pulse is added, thermal damage has been improved in comparison with the recording waveform 18-1 where no cooling pulse is added, so the number of cycles satisfying jitter < 13% has been satisfactory.

Also, as in the recording waveform 18-3, by performing laser light irradiation by a 0.5T bias power after the recording pulse train, the symmetry between the front edge portion and the rear edge portion of the mark is controlled more satisfactorily, so the jitter has become smaller in comparison with the recording waveform 18-2.

In addition, even in the case where the positions of the start edge pulse and the end edge pulse of the recording pulse train are changed according to the length of a mark to be recorded and the front and rear spacings of the mark, thermal damage has been improved for the recording waveform 18-5 where the cooling pulse is added as in the present invention, in comparison with the recording waveform 18-4 where no cooling pulse is added. Therefore, the number of cycles satisfying jitter < 13% has been satisfactory.

Furthermore, in the case where the positions of the start edge pulse and the end edge pulse of the recording pulse train are changed according to the length of a mark to be recorded and the front and rear spacings of the mark, the configuration of the mark can be more controlled than the case where the positions are not changed, so the jitter has become smaller.

Moreover, as in the recording waveforms 18-6 and 18-7 of the present invention, irradiation at a bias power is performed between the end edge pulse of the recording pulse train and the laser light irradiation which is performed with a bias power, whereby both the jitter value after 100 cycles and the number of cycles satisfying jitter < 13% are improved, and satisfactory values are obtainable in comparison with the recording waveform 18-5 where immediately after the recording pulse train, laser light irradiation is performed with a cooling power.

As described above, the laser light irradiation at a bias Power is put between the end edge portion of the recording pulse train where laser light irradiation is performed with a cooling power and the laser light irradiation which is performed with a cooling power, whereby the jitter value after 100 cycles is improved and satisfactory recording become possible even when a multi-cycle is performed.

Also, in this embodiment and these examples, while there has been shown the case where the cooling power is a light reproducing power, similar results were also obtained for the case where the cooling power is between 0 and a power smaller than a bias power.

Also, in this embodiment and these examples, while there has been shown the case where the second power of a recording pulse train is a bias power, similar results were also obtained for the case where the second power is greater than 0 and less than a recording power.

### INDUSTRIAL APPLICABILITY

According to the recording method of the present invention, a fluctuation in the length of a mark due to the thermal interference between marks is suppressed and the symmetry between the front end portion and the rear end portion of the mark becomes better. Therefore, the mark can be formed into a desired shape, the high-density requirement for optical disks can be met, and an enhancement in the quality of a reproduced signal can be realized even in the case where a method of rotating a disk is constant in angular velocity. Also, signal degradation due to thermal damage in the case of a multi-cycle can be alleviated and satisfactory cycle characteristics can be realized.

## Claims

1. A recording method in which information is recorded by forming a recording mark on an optical recording medium by laser beam radiation,
wherein said recording mark is formed by radiating, as a recording pulse train, a laser beam modulated between a first power and a second power lower than said first power,
wherein said laser beam is radiated at said first power at a beginning and an end of said recording pulse train, and a laser beam of said first power and a laser beam of said second power are alternatively radiated between a beginning pulse and an end pulse of said recording pulse train, thus forming an intermediate recording pulse train,
wherein a laser beam of a cooling power still lower than a bias power lower than said first power is radiated immediately after said end pulse of said intermediate recording pulse train is radiated,
**characterized in that**
positions of said beginning pulse and said end pulse of said recording pulse train are changed relative to the position of said intermediate pulse train according to a length of the recording mark and a distance between continuously formed recording marks and thereby also changing the relative position of the cooling pulse.

2. A recording method according to claim 1, wherein the laser beam of said first power and the laser beam of said second power are alternately radiated in a cycle shorter than one cycle of a data clock between said beginning pulse and said end pulse of said recording pulse train.

## Patentansprüche

1. Aufzeichnungsverfahren, mit dem Informationen aufgezeichnet werden, indem eine Aufzeichnungsmarkierung auf einem optischen Aufzeichnungsmedium durch eine Laserstrahlbestrahlung aufgezeichnet werden,
wobei die Aufzeichnungsmarkierung gebildet wird, indem mit einem Laserstrahl als ein Aufzeichnungspulszug gestrahlt wird, der zwischen einer ersten Leistung und einer zweiten Leistung moduliert wird, die niedriger als die erste Leistung ist,
wobei der Laserstrahl mit der ersten Leistung am Anfang und am Ende des Aufzeichnungspulszugs abgestrahlt wird, und ein Laserstrahl der ersten Leistung und ein Laserstrahl der zweiten Leistung abwechselnd zwischen einem Anfangspuls und einem Endpuls des Aufzeichnungspulszugs abgestrahlt werden, so dass ein Zwischenaufzeichnungspulszug gebildet wird,
wobei ein Laserstrahl mit einer Kühlleistung, noch niedriger als eine Vorleistung, die niedriger als die erste Leistung ist, abgestrahlt wird, unmittelbar nachdem der Endpuls des Zwischenaufzeichnungspulszugs abgestrahlt ist,
**dadurch gekennzeichnet,** dass
Positionen des Anfangspulses und des Endpulses des Aufzeichnungspulszugs in Bezug auf die Position des Zwischenpulszugs entsprechend einer Länge der Aufzeichnungsmarkierung und einem Abstand zwischen fortlaufend gebildeten Aufzeichnungsmarkierungen geändert werden und dadurch auch die relative Position des Kühlpulses geändert wird.

2. Aufzeichnungsverfahren nach Anspruch 1, in dem der Laserstrahl der ersten Leistung und der Laserstrahl der zweiten Leistung abwechselnd in einem Zyklus, der kürzer als ein Zyklus eines Datentakts ist, zwischen dem Anfangspuls und dem Endpuls des Aufzeichnungspulszugs abgestrahlt werden.

## Revendications

1. Procédé d'enregistrement dans lequel des informations sont enregistrées en formant une marque d'enregistrement sur un support d'enregistrement optique à l'aide d'une irradiation de faisceau laser,
dans lequel ladite marque d'enregistrement est formée en émettant, sous forme d'un train d'impulsions d'enregistrement, un faisceau laser modulé entre une première puissance et une seconde puissance inférieure à ladite première puissance,
dans lequel ledit faisceau laser est émis à ladite première puissance à un début et à une fin dudit train d'impulsions d'enregistrement, et un faisceau laser ayant ladite première puissance et un faisceau laser ayant ladite seconde puissance sont émis d'une manière alternée entre une impulsion de début et une impulsion de fin dudit train d'impulsions d'enregistrement, formant ainsi un train d'impulsions d'enregistrement intermédiaire,
dans lequel un faisceau laser, ayant une puissance de refroidissement encore inférieure à une puissance de polarisation qui est inférieure à ladite première puissance, est émis immédiatement après l'émission de ladite impulsion de fin dudit train d'impulsions d'enregistrement intermédiaire,
caractérisé en ce que
on change les positions de ladite impulsion de début et de ladite impulsion de fin dudit train d'impulsions d'enregistrement par rapport à la position dudit train d'impulsions intermédiaire en fonction d'une longueur de la marque d'enregistrement et d'une distance entre des marques d'enregistrement formées d'une manière continue et de manière à changer également la position relative de l'impulsion de refroidissement.

2. Procédé d'enregistrement selon la revendication 1, dans lequel le faisceau laser ayant ladite première puissance et le faisceau laser ayant ladite seconde puissance sont émis d'une manière alternée pendant un cycle plus court qu'un cycle d'une horloge de données entre ladite impulsion de début et ladite impulsion de fin dudit train d'impulsions d'enregistrement.
